# EUROPEAN PATENT APPLICATION

(11) **EP 2 166 046 A1**
(43) Date of publication of application: **24.03.2010**
(21) Application number: 09011673.2
(22) Date of filing: 11.09.2009
(51) Int. Cl.: C09D 11/00

(54) **Ink set and inkjet recording method**

(30) Priority: 19.09.2008 JP 2008241714
(71) Applicant: FUJIFILM Corporation, Minato-ku Tokyo (JP)
(72) Inventor: Irita, Kiyoshi, Kanagawa (JP)
(74) Representative: HOFFMANN EITLE

(57) **Abstract**

An ink set includes (i) an ink composition including a pigment, polymer particles, and a first water-soluble polymerizable compound that undergoes polymerization when irradiated with an active energy radiation; and (ii) a treatment liquid including a coagulant that coagulates components in the ink composition and a second water-soluble polymerizable compound that undergoes polymerization when irradiated with an active energy radiation and that may be the same as the first water-soluble polymerizable compound or different from the first water-soluble polymerizable compound.

## Description

### BACKGROUND OF THE INVENTION

### Field of the Invention

The present invention relates to an ink set suitable for recording an image by jetting an ink according to an inkjet method, and an inkjet recording method using the same.

### Description of the Related Art

Various methods have recently been proposed as image recording methods for recording color images. In each method, desired quality of prints is high, including image quality, texture, and post-recording curl.

For example, inkjet techniques have been applied to office printers, home printers, and the like, and have recently been begun to be applied to commercial printing. In commercial printing, printed sheets are required to have an appearance similar to that of general printing paper, rather than a surface, such as that of a photograph, that completely blocks penetration of ink solvent into base paper. However, the range of properties such as surface gloss, texture and stiffness is limited when a recording medium has a solvent absorption layer with a thickness as large as from 20 µm to 30 µm. Therefore, application of inkjet techniques in commercial printing has been limited, for example, to posters and vouchers, with respect to which the restrictions on surface gloss, texture, stiffness and the like are tolerable.

Recording media exclusively for inkjet recording have high production costs due to incorporation of solvent-absorbing layers and water-proof layers, which is one of the factors that limit application of inkjet techniques to commercial printing.

A pigment is widely used as a colorant that is one of the components contained in an ink material. When used, the pigment is dispersed in a medium such as water. When the pigment is dispersed and used, the diameter, post-dispersing stability, and size uniformity of the dispersed particles, jettability from jetting heads, and the like are important. Techniques that improve such properties have been studied widely.

There are cases in which pigment-containing inks do not have satisfactory properties in terms of fixability (for example, resistance to rubbing), water resistance, and stain resistance since such inks generally remain on a surface of a recording medium rather than penetrating into the recording medium.

With a view to providing a pigment-containing ink with excellent water resistance and stain resistance, an inkjet ink composition has been disclosed which contains self-dispersing polymer particles (see, for example, Japanese Patent No. 3,069,543).

A method for providing a pigment-containing ink with excellent resistance to rubbing and water has been disclosed in which a solution containing a polar polymer is applied, together with the pigment ink, onto a recording medium (see, for example, Japanese Patent No. 3,217,486). Another method has also been disclosed in, for example, Japanese Patent No. 3,206,797; in this method, a reaction liquid that reacts with an ink composition, such as a liquid containing a polyvalent metal salt or a polyallylamine, and an ink containing a pigment and a thermoplastic resin emulsion are used to form an image, which is then fixed at a temperature that is not lower than the softening temperature of the thermoplastic resin.

However, satisfactory properties may not be obtained in the method of including self-dispersing polymer particles, the method of applying a solution containing a polar polymer onto a recording medium, and the method of including a thermoplastic latex in an ink and performing fixing at a temperature not lower than the softening point of the thermoplastic resin. This is because, although the contained polymer or resin works as a binder and improves fixability; water resistance, and the like, the fixability is influenced by thermoplastic properties of the polymer. In particular, when inkjet recording is performed at high speed, the tendency to unsatisfactory properties is conspicuous since sufficient thermal fixing may not be achieved. In such a case, fixing properties can be improved by lowering the softening temperature of the polymer; however, the lowered softening temperature also results in adhesion phenomenon (blocking) of an image surface in a high-temperature environment, and it is difficult to achieve both of improvement in fixability and suppression of the blocking.

The degradation of fixability of the aqueous pigment ink is also affected by the properties of printed sheets. For example, tendency for a pigment to remain on the paper surface is greater and high-speed recording of high-quality images is not possible when the paper is common printing paper used for usual offset printing, which have liquid infiltration property inferior to that of plain paper.

In this relation, a technique of using an ink in which a polymerizable monomer and a pigment are used in combination and curing the ink with UV rays (UV inkjet) is widely known and commonly used. The UV inkjet achieves excellent resistance to rubbing. However, the ink used for the UV inkjet is generally a solvent-based ink, which is environmentally unfavorable, and, when pre-curing ink droplets contact each other, the ink droplets coalesce (spotting interference). Therefore, the UV inkjet is unsuitable for high-speed recording.

Regarding aqueous pigment inks, which are environmentally favorable, studies for improving rubbing resistance by including a polymerizable monomer in an aqueous pigment ink and curing the same have been conducted. For example, an inkjet recording method has been disclosed (see, for example, Japanese Patent No. 3,642,152) in which printing is performed on a recording medium by depositing (i) a reaction liquid containing a photopolymerization initiator and a reactive agent that cause coagulation when contacting with an ink composition and (ii) an ink composition containing an acrylate monomer and/or a resin emulsion. Further, an ink of one-component type used for inkjet recording has been disclosed (see, for example, Japanese Patent No. 3,576,862) which includes a specific cationic oligomer and a photopolymerization initiator, together with a colorant and water.

### SUMMARY OF THE INVENTION

The present invention has been made in view of the above circumstances and provides an ink set and an inkjet recording method.
According to a first aspect of the present invention, there is provided an ink set including (i) an ink composition including a pigment, polymer particles, and a first water-soluble polymerizable compound that undergoes polymerization when irradiated with an active radiation and (ii) a treatment liquid including a coagulant that coagulates components contained in the ink composition and a second water-soluble polymerizable compound that undergoes polymerization when irradiated with an active energy radiation.
The first water-soluble polymerizable compound may be the same as, or different from, the second water-soluble polymerizable compound.

According to a second aspect of the present invention, there is provided an inkjet recording method including:
applying an ink composition including a pigment, polymer particles, and a first water-soluble polymerizable compound that undergoes polymerization when irradiated with an active energy radiation, onto a recording medium by an inkjet method; and
applying, onto the recording medium, a treatment liquid including a coagulant that coagulates components contained in the ink composition and a second water-soluble polymerizable compound that undergoes polymerization when irradiated with an active energy radiation. The first water-soluble polymerizable compound may be the same as, or different from, the second water-soluble polymerizable compound.

### BRIEF DESCRIPTION OF THE DRAWINGS

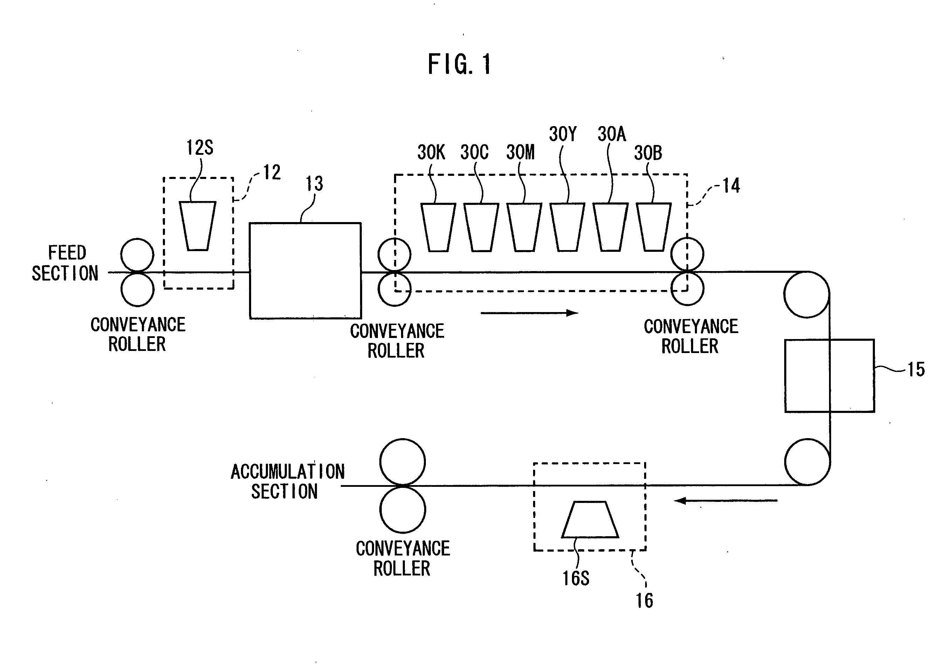

Fig. 1 is a rough schematic diagram illustrating an example of the configuration of an inkjet recording device used for the inkjet recording method according to the present invention.

### DETAILED DESCRIPTION OF THE INVENTION

While an aqueous pigment ink containing an aqueous medium is used in the method disclosed in Japanese Patent No. 3,642,152, this document is silent about the solubility of a monomer, and, therefore, does not overcome problems that are produced by addition of a water-soluble monomer. In such an ink composition as disclosed in Japanese Patent No. 3,642,152, the monomer and the pigment separate from each other, and sufficient rubbing resistance of an image is not realized. Further, although an ink disclosed in Japanese Patent No. 3,642,152 is reacted with a reaction liquid so as to immobilize the ink, the tendency for the monomer to separate results in an insufficient immobilization reaction.

In the method disclosed in Japanese Patent No. 3,576,862, the ink includes a specific polymerizable monomer (oligomer) having sufficient water-solubility, thus achieving a condition in which the pigment and the monomer does not readily separate and the rubbing resistance can be readily improved. However, components in the ink before curing have a tendency to coalesce, and the ink is unsuitable for high-speed recording. Regarding this issue, when immobilization of pre-curing ink is attempted using a two-component reaction system as disclosed in Japanese Patent No. 3,642,152, it is difficult to perform sufficient immobilization reaction due to high solubility of the monomer.

When ink droplets are spotted on permeable paper using this method, the pigment remains on the paper surface while the monomer penetrates into the paper, thereby resulting in insufficient rubbing resistance in some cases.

The present invention has been made in view of the above circumstances.
The ink set of the present invention and an inkjet recording method using the ink set are described in detail below.

### <Ink Set>

The ink set of the present invention is configured to include an ink composition and a treatment liquid; the ink composition including a pigment, polymer particles, and a first water-soluble polymerizable compound that is polymerized by an active energy radiation, and the treatment liquid including a coagulant that coagulates components in the ink composition and a second water-soluble polymerizable compound that is polymerized by an active energy radiation. The first water-soluble polymerizable compound may be the same as, or different from, the second water-soluble polymerizable compound.

In the present invention, the ink composition, which will form an ink image, includes polymer particles and a water-soluble polymerizable compound that can be cured through polymerization, together with a pigment; moreover, the treatment liquid that serves to coagulate components in the ink also includes a water-soluble polymerizable compound that can be cured through polymerization. Due to this configuration, an image is immobilized by a coagulation reaction of the pigment and/or the polymer particles when the ink composition contacts the treatment liquid. Further, the polymer particles are present between particles of the pigment, and the polymerizable compound, which is in the state of being incorporated into a space among such particles in the immobilized image, is cured through polymerization, whereby the intensity of the image is increased. In other words, components in the ink composition are coagulated rapidly to prevent intermixing of ink droplets, and, as a result, suitability for high-speed recording and effects in improving the hue and image printing properties during high-speed recording are imparted, while the polymerizable compound enters, to an appropriate extent, into a space among the pigment particles and the polymer particles that are in a coagulated state. In this state, the polymerizable compound enters into the space to a higher extent than the extent to which the polymerizable compound enters into a space between the pigment particles when the polymer particles are absent. Since the polymerizable compound is polymerized and cured in this state, the image strength can be improved, and suitability for high-speed recording and improvement in the rubbing resistance of an image can be both achieved.
In particular, these effects are more conspicuous when image recording is performed on a coated paper as a recording medium having a surface at which the pigment tends to remain.

The polymer particles are preferably self-dispersing polymer particles. When the self-dispersing polymer particles are used, color and image printing properties at the time of high-speed recording are further improved, and the reason therefor is considered as follows.

In general, polymer particles, such as a latex, are usually synthesized by, for example, emulsion polymerization using an emulsifying agent. During the synthesis, not the whole of the emulsifying agent is adsorbed to the polymer particles, and some portion of the emulsifying agent is present in the liquid while maintaining an equilibrium between adsorption and liberation; in other words, the free emulsifying agent is present as an extra component that inhibits coagulation, so that the coagulation properties observed when coagulation components in the treatment liquid contact the ink tend to be decreased. In the present invention, when a soap-free self-dispersing polymer is used as a component of the ink composition, the coagulation components directly work so that the coagulation reaction easily occurs, and quicker coagulation of ink composition components is enabled. Thus, bleed and intercolor mixing caused by interference between ink droplets are prevented more effectively, and an image having improved color and image printing properties (such as reproducibility of thin lines and minute portions in the image) is obtained at increased speed, compared to conventional techniques.

### -Ink Composition-

An ink composition in the present invention includes a pigment, polymer particles, and a water-soluble polymerizable compound that undergoes polymerization when irradiated with an active radiation. The ink composition may further contain a dispersant, a surfactant, and other components, as necessary.

### (Pigment)

The ink composition in the present invention includes at least one pigment as a colorant component. The pigment is not particularly limited, and may be selected appropriately according to the purpose. For example, the pigment may be an organic pigment or an inorganic pigment. The pigment is preferably almost completely insoluble in water or hardly-soluble in water, in consideration of ink coloring properties.

Examples of the organic pigment include azo pigments, polycyclic pigments, dye chelates, nitro pigments, nitroso pigments, and aniline black. Among these, azo pigments and polycyclic pigments are preferable.
Examples of the inorganic pigment include titanium oxide, iron oxide, calcium carbonate, barium sulfate, aluminum hydroxide, barium yellow, cadmium red, chromium yellow, and carbon black. Among these, carbon black is preferable.

Examples of organic pigments for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 17, C. I. Pigment Yellow 74, C. I. Pigment Yellow 93, C. I. Pigment Yellow 94, C. I. Pigment Yellow 128, C. I. Pigment Yellow 138, C. I. Pigment Yellow 151, C. I. Pigment Yellow 155, C. I. Pigment Yellow 180 and C. I. Pigment Yellow 185.

Examples of organic pigments for magenta or red include C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 222 and C. I. Pigment Violet 19.

Examples of organic pigments for green or cyan include C. I. Pigment Blue 15, C. I. Pigment Blue 15:2, C. I. Pigment Blue 15:3, C. I. Pigment Blue 15:4, C. I. Pigment Blue 16, C. I. Pigment Blue 60 and C. I. Pigment Green 7, and aluminum phthalocyanine pigments crosslinked with siloxane such as those described in U.S. Patent No. 4,311,775.
Examples of organic pigments for black include C. I. Pigment Black 1, C. I. Pigment Black 6 and C. I. Pigment Black 7.

Although the average particle diameter of the organic pigment is preferably small in view of transparency or color reproducibility, the average particle diameter of the organic pigment is preferably large in view of lightfastness. In order to satisfy both of the above requirements, the average particle diameter of the organic pigment is preferably from 10 to 200 nm, more preferably from 10 to 150 nm, and further preferably from 10 to 100 nm. The particle size distribution of the organic pigment is not particularly limited, and may be either a broad particle size distribution or a monodispersed particle size distribution. In an embodiment, a mixture of two or more monodispersed organic pigments is used.

The content of the pigment is preferably from 1 to 25 mass%, more preferably from 2 to 20 mass%, further preferably from 5 to 20 mass%, and particularly preferably from 5 to 15 mass%, with respect to the total mass of the ink composition.

### ∼dispersant∼

The ink composition of the present invention may contain at least one dispersant. The dispersant for dispersing a pigment may be either a polymeric dispersant or a low-molecular surfactant-type dispersant. The polymeric dispersant may be either water-soluble or water-insoluble.

With the low-molecular surfactant-type dispersant, a pigment can be dispersed in an aqueous medium in a stable manner, while maintaining the viscosity of the ink at a low level. The low-molecular surfactant-type dispersant is a low-molecular dispersant having a molecular weight of 2,000 or less, preferably from 100 to 2,000, and more preferably from 200 to 2,000.

The low-molecular surfactant-type dispersant mentioned above has a structure containing a hydrophilic group and a hydrophobic group. The number of hydrophilic groups and the number of hydrophobic groups per one molecule are each independently one or more. The low-molecular surfactant-type dispersant may include plural kinds of hydrophilic group and/or plural kinds of hydrophobic group. The low-molecular surfactant-type dispersant may include a linking group that links the hydrophilic group and the hydrophobic group, as appropriate.
Examples of the hydrophilic group include an anionic group, a cationic group, and a nonionic group, and a betaine group in which two or more of the above groups are combined.

The anionic group is not particularly limited as long as the group has a negative charge. The anionic group is preferably a phosphoric acid group, a phosphonic acid group, a phosphinic acid group, a sulfuric acid group, a sulfonic acid group, a sulfinic acid group, or a carboxyl group, more preferably a phosphoric acid group or a carboxyl acid group, and still more preferably a carboxyl acid group.

The cationic group is not particularly limited as long as the group has a positive charge. The cationic group is preferably an organic cationic group, more preferably a cationic group of nitrogen or phosphorus, and further preferably a pyridinium cationic group or an ammonium cationic group.

Examples of the nonionic group include polyethylene oxide, polyglycerin, and a sugar unit of a certain kind.
The hydrophilic group is preferably an anionic group as described above.

When the low-molecular surfactant-type dispersant has an anionic hydrophilic group, the dispersant preferably has a pKa of 3 or more, in terms of promoting coagulation reaction upon contacting with an acidic treatment liquid. The pKa mentioned here is an experimentally-obtained value based on a titration curve which is obtained by titrating a 1 mmol/L solution of a low-molecular surfactant-type dispersant in tetrahydrofuran/water at a ratio of 3:2 (THF : water, V/V), with an acid or alkali aqueous solution. When the pKa of the low-molecular surfactant-type dispersant is 3 or more, 50% or more of the anionic groups theoretically become undissociated upon contact with a liquid having a pH of around 3. Accordingly, the water-solubility of the low-molecular surfactant-type dispersant is significantly reduced, as a result of which a coagulation reaction occurs, namely, the coagulation reactivity is improved. From this point of view, the low-molecular surfactant-type dispersant preferably has a carboxyl group as an anionic group.

The hydrophobic group has, for example, a hydrocarbon structure, a fluorocarbon structure, or a silicone structure, and the hydrocarbon structure is preferable. The hydrophobic group may have either a straight-chain structure or a branched structure.
Further, the hydrophobic group may have a single-chain structure or multi-chain structure. When there are two or more chains, the chains may include two or more kinds of hydrophobic group. The hydrophobic group is preferably a hydrocarbon group having a carbon number of from 2 to 24, more preferably from 4 to 24, and yet more preferably from 6 to 20.

When the polymeric dispersant is a water-soluble dispersant, examples thereof include a hydrophilic polymeric dispersant. Examples of natural hydrophilic polymeric compounds include plant polymers such as gum arabic, gum tragacanth, guar gum, gum karaya, locust bean gum, arabinogalactan, pectin and quince seed starch, algae polymers such as alginic acid, carrageenan and agar, animal polymers such as gelatin, casein, albumin and collagen, and microbial polymers such as xanthene gum and dextran.

Examples of hydrophilic polymeric compounds obtained by modifying natural raw materials include fibrous polymers such as methyl cellulose, ethyl cellulose, hydroxyethyl cellulose, hydroxypropyl cellulose and carboxymethyl cellulose, starch polymers such as sodium starch glycolate (sodium salt of starch glycolate), and sodium starch phosphate (sodium salt of starch phosphate[ester]), and algae polymers such as sodium alginate and propylene glycol alginate.

Examples of synthetic hydrophilic polymeric compounds include vinyl polymers such as polyvinyl alcohol, polyvinyl pyrrolidone and polyvinyl methyl ether; acrylic resins such as non-crosslinked polyacrylamide, polyacrylic acid or an alkali metal salt thereof, and water-soluble styrene acrylic resins; water-soluble styrene maleic acid resin; water-soluble vinylnaphthalene acrylic resin; water-soluble vinylnaphthalene maleic acid resins; polyvinyl pyrrolidone; polyvinyl alcohol; alkali metal salts of formalin condensates of β-naphthalene sulfonic acid; polymeric compounds having, at a side chain, a salt of a cationic functional group such as a quaternary ammonium group or an amino group; and natural polymeric compounds such as shellac.

Among these, water-soluble dispersants to which a carboxyl group is introduced are preferable, and examples thereof include homopolymers of acrylic acid, methacrylic acid or styrene acrylic acid, and copolymers thereof with another monomer having a hydrophilic group.

The water-insoluble dispersants include a polymer having both hydrophilic and hydrophobic moieties, such as styrene-(meth)acrylic acid copolymer, styrene-(meth)acrylic acid-(meth)acrylate copolymer, (meth)acrylate-(meth)acrylic acid copolymer, polyethylene glycol(meth)acrylate-(meth)acrylic acid copolymer, vinylacetate-maleic acid copolymer, and styrene-maleic acid copolymer.

The weight average molecular weight of the polymer dispersant is preferably from 3,000 to 100,000, more preferably from 5,000 to 50,000, further preferably from 5,000 to 40,000, and yet further preferably from 10,000 to 40,000.

The acid value of the polymer dispersant is preferably not more than 100 mgKOH/g, in view of achieving excellent coagulation properties when contacting with the treatment liquid. The acid value is more preferably from 25 mgKOH/g to 100 mgKOH/g, still more preferably from 25 mgKOH/g to 80 mgKOH/g, and particularly preferably from 30 mgKOH/g to 65 mgKOH/g. When the acid value of the polymer dispersant is 25 mgKOH/g or more, the stability of the self-dispersing properties is satisfactory.

The polymer dispersant preferably includes a polymer having a carboxyl group, more preferably a polymer having a carboxyl group and an acid value of from 25 mgKOH/g to 80 mgKOH/g, from the viewpoint of the coagulation speed at the time the self-dispersing polymer contacts the treatment liquid.

The mixing ratio by mass of pigment (p) to dispersant (s) (p:s) is preferably in a range of from 1:0.06 to 1:3, more preferably in a range of from 1:0.125 to 1:2, and still more preferably in a range of from 1:0.125 to 1:1.5.

In the present invention, when a dye is used as a colorant, a dye retained on a water-insoluble carrier may be used as a water-insoluble colorant particle. The dye may be selected from known dyes without particular restrictions, and the dyes described in, for example, JP-A Nos. 2001-115066, 2001-335714, and 2002-249677 may be used suitably in the present invention. The carrier is not particularly limited as long as the carrier is insoluble in water or hardly-soluble in water, and the carrier may be selected from an inorganic material, an organic material, or a composite material thereof. Specifically, the carriers described in, for example, JP-A Nos. 2001-181549 and 2007-169418 may be used suitably in the present invention.

The carrier retaining the dye (water-insoluble colorant particle) may be used in the form of an aqueous dispersion containing a dispersant. As the dispersant, the above-mentioned dispersants may be used suitably.

In the present invention, the ink composition preferably includes a pigment and a dispersant, more preferably includes an organic pigment and a polymer dispersant, and particularly preferably includes an organic pigment and a polymer dispersant containing carboxyl group, in consideration of the light-fastness, quality, and the like of the image. From the viewpoint of coagulation properties, it is preferable that the pigment is covered with a polymer dispersant having a carboxyl group and is water-insoluble. From the viewpoint of coagulation properties, it is preferable that the acid value of the below-mentioned self-dispersing polymer particle is smaller than the acid value of the polymer dispersant described above.

The average particle diameter of the pigment is preferably from 10 nm to 200 nm, more preferably from 10 nm to 150 nm, and still more preferably from 10 nm to 100 nm. When the average particle diameter is 200 nm or less, color reproducibility is excellent, and jetting properties are excellent when jetting droplets by an inkjet method. When the average particle diameter is 10 nm or more, light-fastness is excellent. The particle size distribution of the colorant is not particularly limited, and may be a broad particle size distribution or a monodispersed particle size distribution. It is also possible to use a mixture of two or more colorants having monodispersed particle size distributions.

The average particle diameter and particle size distribution of the polymer particles are obtained by measuring volume average particle diameter by a dynamic light scattering method, using a Nanotrac particle size distribution measuring instrument UPA-EX150 (tradename, manufactured by NIKKISO Co., Ltd.).

The pigment may be used singly or in combination of two or more thereof. From the viewpoint of image density, the content of pigment in the ink composition is preferably from 1 to 25 % by mass, more preferably from 2 to 20 % by mass, still more preferably from 5 to 20 % by mass, and particularly preferably from 5 to 15 % by mass, with respect to the ink composition.

### (Polymer Particle)

In the present invention, the ink composition includes at least one type of polymer particles. The polymer particles have a function to immobilize the ink composition when contacting with the below-mentioned treatment liquid or an area on which the treatment liquid has been applied and dried. When contacting with the treatment liquid or the area, the dispersion state of the polymer particles becomes unstable and the polymer particles aggregate, whereby the viscosity of the ink is increased and the immobilization of the ink composition is achieved. Thus, the polymer particles further improve the fixability of the ink composition to a recording medium and the rubbing resistance of an image.

The polymer particles that react with a coagulant may be polymer particles having anionic surface charge, which may be a commonly-known latex as long as sufficient reactivity and jetting stability are obtained. As the polymer particles, it is preferable to use self-dispersing polymer particles.
In the following, self-dispersing polymer particles, which are preferable polymer particles, are described in detail.

### -Self-Dispersing Polymer Particles-

In the present invention, the ink composition preferably includes, as the polymer particles, at least one type of self-dispersing polymer particles. The self-dispersing polymer particles have a function to immobilize the ink composition when contacting with the below-mentioned treatment liquid or an area on which the treatment liquid has been applied and dried. When contacting with the treatment liquid or the area, the dispersion state of the self-dispersing polymer particles becomes unstable and the self-dispersing polymer particles aggregate, whereby the viscosity of the ink is increased and the immobilization of the ink composition is achieved. Thus, the self-dispersing polymer particles further improve the fixability of the ink composition to a recording medium and the rubbing resistance of an image. The self-dispersing polymer particles are considered to be preferable resin particles also from the viewpoint of jetting stability and liquid stability (particularly, dispersion stability) of the system containing the pigment.

The self-dispersing polymer particles are particles of a water-insoluble polymer that does not contain a free emulsifier and that can get into a dispersed state in an aqueous medium even in the absence of other surfactants due to a functional group (particularly, an acidic group or a salt thereof) which the polymer itself has.

The scope of the term, "dispersed state", used herein includes an emulsified state (emulsion) in which a water-insoluble polymer in the liquid state is dispersed in an aqueous medium and a state (suspension) in which a water-insoluble polymer in the solid state is dispersed in an aqueous medium.

The water-insoluble polymer used in the present invention is preferably a water-insoluble polymer that can get into a dispersed state in which the water-insoluble polymer is dispersed in the solid state, in consideration of the aggregation speed and the fixability when the water-insoluble polymer is contained in a liquid composition.

The following procedure can be used to determine whether a water-insoluble polymer is a self-dispersing polymer as mentioned herein: 30 g of a water-insoluble polymer is dissolved in 70 g of an organic solvent (such as methyl ethyl ketone) to form a solution, the solution is mixed with 200 g of water and a neutralizing agent that can neutralize the salt-forming groups of the water-insoluble polymer to a degree of 100% (the neutralizing agent being sodium hydroxide if the salt-forming groups are anionic, or acetic acid if the salt-forming groups are cationic), the mixture is stirred with a stirrer having a stirring blade at a rotation rate of 200 rpm at 25°C for 30 minutes, and the organic solvent is removed from the mixture liquid. If a stable dispersion state of the water-insoluble polymer in the mixture liquid is confirmed by visual observation for at least one week at 25°C after the removal of the organic solvent, the water-insoluble polymer is considered to be a self-dispersing polymer.

The term "water-insoluble polymer" used herein refers to a polymer that shows a solubility of 10 g or less when the polymer is dried at 105°C for 2 hours and then dissolved in 100 g of water at 25°C. The solubility is preferably 5 g or less, and more preferably 1 g or less. The solubility mentioned above is a value measured after the polymer is 100% neutralized with either sodium hydroxide or acetic acid depending on the kind of the salt-forming groups of the water-insoluble polymer.

The aqueous medium includes water and, optionally, a hydrophilic organic solvent. In the present invention, the aqueous medium is preferably formed by water and a hydrophilic organic solvent whose amount is 0.2 % by mass or less with respect to the amount of the water, and is more preferably formed by water only.

The main chain backbone of the water-insoluble polymer is not particularly limited, and may be, for example, a vinyl polymer or a condensed polymer (such as an epoxy resin, polyester, polyurethane, polyamide, cellulose, polyether, polyurea, polyimide, or polycarbonate). Among them, a vinyl polymer is preferable.

Preferable examples of the vinyl polymer and the monomer or monomers for forming the vinyl polymer include those described in JP-A Nos. 2001-181549 and 2002-88294. A vinyl polymer may be used which has a dissociative group introduced to a terminal of the polymer chain; the dissociative group may be introduced by radical polymerization of a vinyl monomer using a chain transfer agent, polymerization initiator, or iniferter that has the dissociative group (or a substituent that can be converted to the dissociative group), or by ion polymerization using a compound having the dissociative group (or a substituent that can be converted to the dissociative group) as either of an initiator or a terminator.
Preferable examples of the condensed polymer and the monomers for forming the condensed polymer include those described in JP-A No. 2001-247787.

The self-dispersing polymer particles preferably include a water-insoluble polymer having a hydrophilic structural unit and a hydrophobic structural unit, from the viewpoint of self-dispersibility. The hydrophobic structural unit is preferably derived from a monomer containing an aromatic group. The expression "... structural unit ... derived from ... (A)" used herein means a component in a polymer which component is formed by the binding of
(A) to an adjacent structural unit or units.

The hydrophilic structural unit is not particularly limited as long as it derives from a monomer containing a hydrophilic group. The hydrophilic structural unit may derive from only one type of hydrophilic-group-containing monomer or from two or more types of hydrophilic-group-containing monomer. The hydrophilic group is not particularly limited, and may be a dissociative group or a nonionic hydrophilic group.

In the present invention, the hydrophilic group is preferably a dissociative group, and more preferably an anionic dissociative group, from the viewpoints of enhancing self-dispersibility and providing stability of the formed emulsion or dispersion state. The dissociative group may be, for example, a carboxyl group, a phosphoric acid group, or a sulfonic acid group. In particular, a carboxyl group is preferable as the dissociative group, in consideration of the fixability of an ink composition containing the self-dispersing polymer particles.

The hydrophilic-group-containing monomer in the present invention is preferably a monomer containing a dissociative group, and more preferably a monomer containing a dissociative group and an ethylenic unsaturated bond, in consideration of self-dispersibility and aggregation property.

The dissociative-group-containing monomer may be, for example, an unsaturated carboxylic acid monomer, an unsaturated sulfonic acid monomer, or an unsaturated phosphoric acid monomer

Examples of the unsaturated carboxylic acid monomer include acrylic acid, methacrylic acid, crotonic acid, itaconic acid, maleic acid, fumaric acid, citraconic acid, and 2-methacryloyloxymethylsuccinic acid. Examples of the unsaturated sulfonic acid monomer include styrenesulfonic acid, 2-acrylamide-2-methylpropane sulfonic acid, 3-sulfopropyl (meth)acrylate, and bis-(3-sulfopropyl) itaconate. Examples of the unsaturated phosphoric acid monomer include vinyl phosphonic acid, vinyl phosphate, bis(methacryloxyethyl) phosphate, diphenyl-2-acryloyloxyethyl phosphate, diphenyl-2-methacryloyloxyethyl phosphate, and dibutyl-2-acryloyloxyethyl phosphate.
Among the above dissociative-group-containing monomers, unsaturated carboxylic acid monomers are preferable, acrylic monomers and methacrylic monomers are more preferable, and acrylic acid and methacrylic acid are still more preferable, in consideration of dispersion stability and jetting stability.

In the present invention, the acid value of the self-dispersing polymer is preferably 50 mgKOH/g or less from the viewpoint of achieving satisfactory coagulation properties when the ink composition contacts with the treatment liquid. The acid value is more preferably from 25 mgKOH/g to 50 mgKOH/g, and still more preferably from 30 mgKOH/g to 50 mgKOH/g. When the acid value of the self-dispersing polymer is 25 mgKOH/g or more, the stability of the self-dispersibility is enhanced.

The self-dispersing polymer particles in the present invention preferably contains a polymer having a carboxyl group, more preferably contains a polymer having a carboxyl group and an acid value of from 25 mgKOH/g to 50 mgKOH/g, and still more preferably contains a polymer having a carboxyl group and an acid value of from 30 mgKOH/g to 50 mgKOH/g, from the viewpoint of self-dispersibility and coagulation speed at the time of contact with the treatment liquid.

The aromatic-group-containing monomer is not particularly limited as long as the monomer is a compound containing an aromatic group and a polymerizable group. The aromatic group may be a group derived from an aromatic hydrocarbon or from an aromatic heterocycle. In the present invention, the aromatic group is preferably an aromatic group derived from an aromatic hydrocarbon, from the viewpoint of improving the stability of the particle shape in an aqueous medium. The expression "group derived from an aromatic hydrocarbon or from an aromatic heterocycle" used herein means a group formed by removing at least one hydrogen atom from an aromatic hydrocarbon or from an aromatic heterocycle.

The polymerizable group may be a condensation-polymerizable group or an addition-polymerizable group. In the present invention, the polymerizable group is preferably an addition-polymerizable group, and more preferably a group containing an ethylenic unsaturated bond, from the viewpoint of improving the stability of the particle shape in an aqueous medium.

The aromatic-group-containing monomer in the present invention is preferably a monomer having an aromatic group derived from an aromatic hydrocarbon and an ethylenic unsaturated bond. The aromatic-group-containing monomer may be used singly or in combination of two or more thereof.

Examples of the aromatic-group-containing monomer include phenoxyethyl (meth)acrylate, benzyl (meth)acrylate, phenyl (meth)acrylate, and a styrene-based monomer. In particular, from the viewpoint of improving the balance between the hydrophilicity and hydrophobicity of the polymer chain and ink fixability, an aromatic-group-containing (meth)acrylate monomer is preferable, and at least one selected from phenoxyethyl (meth)acrylate, benzyl (meth)acrylate, or phenyl (meth)acrylate is more preferable, and phenoxyethyl (meth)acrylate and benzyl (meth)acrylate are still more preferable.
The term "(meth)acrylate" used herein refers to acrylate or methacrylate.

In the present invention, the self-dispersing polymer is preferably an acrylic resin containing a structural unit derived from a (meth)acrylate monomer, more preferably a (meth)acrylic resin containing a structural unit derived from an aromatic-group-containing (meth)acrylate monomer, and still more preferably a (meth)acrylic monomer containing a structural unit derived from an aromatic-group-containing (meth)acrylate monomer at a content of from 10 to 95 % by mass. When the content of the aromatic-group-containing (meth)acrylate monomer is from 10 to 95 % by mass, stability of self-emulsification or dispersion state improves, and, further, an increase in the ink viscosity can be suppressed.

In the present invention, the content of the aromatic-group-containing (meth)acrylate monomer is more preferably from 15 to 90 % by mass, still more preferably from 15 to 80 % by mass, and particularly preferably from 25 to 70 % by mass, from the viewpoints of improving stability of the self-dispersing state, stabilizing the particle shape in an aqueous medium through hydrophobic interaction between aromatic rings, and reducing the amount of water-soluble components by imparting appropriate hydrophobicity to the particles.

In the present invention, the self-dispersing polymer may include, for example, a structural unit derived from an aromatic-group-containing monomer and a structural unit derived from a dissociative-group-containing monomer. The self-dispersing polymer may further include another structural unit, as necessary.

The monomer for forming another structural unit is not particularly limited as long as the monomer is copolymerizable with the aromatic-group-containing monomer and the dissociative-group-containing monomer. In particular, an alkyl-group-containing monomer is preferable from the viewpoint of flexibility of the polymer skeleton and ease in regulating the glass transition temperature (Tg).

Examples of the alkyl-group-containing monomer include (meth)acrylic ester monomers such as alkyl (meth)acrylates (such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethylhexyl (meth)acrylate), ethylenic unsaturated monomers each having a hydroxyl group (such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate, and dialkylaminoalkyl (meth)acrylates such as dimethylaminoethyl (meth)acrylate; and (meth)acrylamide monomers such as N-hydroxyalkyl (meth)acrylamides (such as N-hydroxymethyl (meth)acrylamide, N-hydroxyethyl (meth)acrylamide, and N-hydroxybutyl (meth)acrylamide) and N-alkoxyalkyl (meth)acrylamides (such as N-methoxymethyl (meth)acrylamide, N-ethoxymethyl (meth)acrylamide, N-(n-, iso)butoxymethyl (meth)acrylamide, N-methoxyethyl (meth)acrylamide, N-ethoxyethyl (meth)acrylamide, and N-(n-, iso)butoxyethyl (meth)acrylamide).

The molecular weight of the water-insoluble polymer forming the self-dispersing polymer particles is preferably from 3,000 to 200,000, more preferably from 5,000 to 150,000, and still more preferably from 10,000 to 100,000, in terms of weight average molecular weight. When the weight average molecular weight is 3,000 or more, the amount of water-soluble component can be effectively set to a small amount. When the weight average molecular weight is 200,000 or less, the stability of the self-dispersibility can be improved.

The weight average molecular weight is measured with a gel permeation chromatography (GPC). A GPC instrument, HLC-8220GPC manufactured by Tosoh Corporation, is used; the columns (three in number) to be used are TSKgel Super HZM-H, TSKgel SuperHZ4000, and TSKgel SuperHZ2000 (all manufactured by Tosoh Corporation, 4.6 mmID×15 cm); and THF (tetrahydrofuran) is used as an eluent. Regarding the GPC conditions, the sample concentration is 0.3 % by mass, the flow rate is 0.35 ml/min, the sample injection amount is 10 µl, and the measurement temperature is 40°C. The detection is performed by using an IR detector. The calibration curve is determined from the following eight samples: standard sample TSK STANDARD POLYSTYRENE, F-40, F-20, F-4, F-1, A-5000, A-2500, A-1000, and n-propylbenzene, all manufactured by Tosoh Corporation.

When the water-insoluble polymer forming the self-dispersing polymer particles contains a structural unit derived from an aromatic-group-containing (meth)acrylate monomer (preferably a structural unit derived from phenoxyethyl (meth)acrylate and/or a structural unit derived from benzyl (meth)acrylate), the copolymerization ratio of the structural unit derived from an aromatic-group-containing (meth)acrylate monomer is preferably from 15 to 80 % by mass with respect to the total mass of the self-dispersing polymer particles, from the viewpoint of regulating the hydrophilicity/hydrophobicity of the polymer.

From the viewpoint of regulating the hydrophilicity/hydrophobicity of the polymer, the water-insoluble polymer preferably includes a structural unit derived from an aromatic-group-containing (meth)acrylate monomer at a copolymerization ratio of from 15 to 80 % by mass, a structural unit derived from a carboxyl-group-containing monomer, and a structural unit derived from an alkyl-group-containing monomer (preferably a structural unit derived from an alkyl (meth)acrylate), and more preferably includes a structural unit derived from phenoxyethyl (meth)acrylate and/or a structural unit derived from benzyl (meth)acrylate at a total copolymerization ratio of from 15 to 80 % by mass, a structural unit derived from a carboxyl-group-containing monomer, and a structural unit derived from an alkyl-group-containing monomer (preferably a structural unit derived from (meth)acrylic ester of an alkyl having 1 to 4 carbon atoms); further it is preferable that the acid value of the water-insoluble polymer is from 25 to 100 (mg KOH/g) and the weight average molecular weight of the water-insoluble polymer is from 3,000 to 200,000, and it is more preferable that the acid value is from 25 to 95 (mg KOH/g) and the weight average molecular weight is from 5,000 to 150,000.

Exemplary compounds B-01 to B-19 are shown below, which are examples of the water-insoluble polymer forming the self-dispersing polymer particles. However, the present invention is not limited thereto. The numbers in the parentheses indicate mass ratios of copolymerization components.
B-01: phenoxyethyl acrylate/methyl methacrylate/acrylic acid copolymer (50/45/5)
B-02: phenoxyethyl acrylate/benzyl methacrylate/isobutyl methacrylate/methacrylic acid copolymer (30/35/29/6)
B-03: phenoxyethyl methacrylate/isobutyl methacrylate/methacrylic acid copolymer (50/44/6) B-04: phenoxyethyl acrylate/methyl methacrylate/ethyl acrylate/acrylic acid copolymer (30/55/10/5)
B-05: benzyl methacrylate/isobutyl methacrylate/methacrylic acid copolymer (35/59/6)
B-06: styrene/phenoxyethyl acrylate/methyl methacrylate/acrylic acid copolymer (10/50/35/5)
B-07: benzyl acrylate/methyl methacrylate/acrylic acid copolymer (55/40/5)
B-08: phenoxyethyl methacrylate/benzyl acrylate/methacrylic acid copolymer (45/47/8)
B-09: styrene/phenoxyethyl acrylate/butyl methacrylate/acrylic acid copolymer (5/48/40/7)
B-10: benzyl methacrylate/isobutyl methacrylate/cyclohexyl methacrylate/methacrylic acid copolymer (35/30/30/5)
B-11: phenoxyethyl acrylate/methyl methacrylate/butyl acrylate/methacrylic acid copolymer (12/50/30/8)
B-12: benzyl acrylate/isobutyl methacrylate/acrylic acid copolymer (93/2/5)
B-13: styrene/phenoxyethyl methacrylate/butyl acrylate/acrylic acid copolymer (50/5/20/25) B-14: styrene/butyl acrylate/acrylic acid copolymer (62/35/3)
B-15: methyl methacrylate/phenoxyethyl acrylate/acrylic acid copolymer (45/51/4)
B-16: methyl methacrylate/phenoxyethyl acrylate/acrylic acid copolymer (45/49/6)
B-17: methyl methacrylate/phenoxyethyl acrylate/acrylic acid copolymer (45/48/7)
B-18: methyl methacrylate/phenoxyethyl acrylate/acrylic acid copolymer (45/47/8)
B-19: methyl methacrylate/phenoxyethyl acrylate/acrylic acid copolymer (45/45/10)

The method of producing the water-insoluble polymer forming the self-dispersing polymer particles in the present invention is not particularly limited, and may be a method including performing emulsion polymerization in the presence of a polymerizable surfactant so as to covalently bond the surfactant to the water-insoluble polymer or a method including copolymerizing a monomer mixture containing the hydrophilic-group-containing monomer and the aromatic-group-containing monomer by a known polymerization process such as a solution polymerization method or a bulk polymerization method. Among the above polymerization methods, a solution polymerization is preferable, and a solution polymerization method using an organic solvent is more preferable, in consideration of aggregation speed and jetting stability of an ink composition containing the self-dispersing polymer particles.

From the viewpoint of aggregation speed, the self-dispersing polymer in the present invention preferably includes a polymer synthesized in an organic solvent, wherein the polymer has carboxyl groups, all or some of the carboxyl groups of the polymer are neutralized (to give an acid value of preferably from 25 to 50), and the polymer is prepared in the form of a polymer dispersion in which water constitutes the continuous phase. In other words, the production of the self-dispersing polymer particles in the present invention preferably includes a step of synthesizing a polymer in an organic solvent and a dispersing step of forming an aqueous dispersion in which at least some of the carboxyl groups of the polymer are neutralized.

The dispersion step preferably includes the following substeps (1) and (2):
Substep (1): a step of stirring a mixture containing a polymer (water-insoluble polymer), an organic solvent, a neutralizing agent, and an aqueous medium
Substep (2): a step of removing the organic solvent from the mixture

The substep (1) is preferably a process in which the polymer (water-insoluble polymer) is dissolved in the organic solvent, and then the neutralizing agent and the aqueous medium are gradually added to the polymer solution and mixed, by stirring, with the polymer solution to form a dispersion. When the neutralizing agent and the aqueous medium are added to the water-insoluble polymer solution in which the water-insoluble polymer is dissolved in the organic solvent as in the above process, self-dispersing polymer particles whose diameter is highly stable during storage can be obtained without requiring a strong shearing force.

The method of stirring the mixture is not particularly limited, and may be a method using a generally-used mixing and stirring apparatus and/or, if necessary, a disperser such as an ultrasonic disperser or a high-pressure homogenizer.

Preferable examples of the organic solvent described above include an alcohol solvent, a ketone solvent, and an ether solvent.

Examples of the alcohol solvent include isopropyl alcohol, n-butanol, t-butanol, and ethanol. Examples of the ketone solvent include acetone, methyl ethyl ketone, diethyl ketone, and methyl isobutyl ketone. Examples of the ether solvent include dibutyl ether and dioxane. Among the above solvents, ketone solvents such as methyl ethyl ketone and alcohol solvents such as isopropyl alcohol are preferable. It is also preferable to use isopropyl alcohol and methyl ethyl ketone together for the purpose of making milder the polarity change at the time of phase inversion from an oil phase to an aqueous phase; using the solvents together makes it possible to obtain self-dispersing polymer particles having a very small particle diameter that are free from aggregation precipitation or adhesion between the particles and that have high dispersion stability.

The neutralizing agent is used to neutralize all or some of the dissociative groups of the polymer so as to allow the self-dispersing polymer to get into a stable emulsion or dispersion state in water. When the self-dispersing polymer in the present invention has an anionic dissociative group (e.g., a carboxyl group) as a dissociative group, the neutralizing agent to be used may be a basic compound such as an organic amine compound, ammonia, or an alkali metal hydroxide. Examples of the organic amine compound include monomethylamine, dimethylamine, trimethylamine, monoethylamine, diethylamine, triethylamine, monopropylamine, dipropylamine, monoethanolamine, diethanolamine, triethanolamine, N,N-dimethyl-ethanolamine, N,N-diethyl-ethanolamine, 2-dimethylamino-2-methyl-1-propanol, 2-amino-2-methyl-1-propanol, N-methyldiethanolamine, N-ethyldiethanolamine, monoisopropanolamine, diisopropanolamine, and triisopropanolamine. Examples of the alkali metal hydroxide include lithium hydroxide, sodium hydroxide, and potassium hydroxide. Among them, sodium hydroxide, potassium hydroxide, triethylamine, and triethanolamine are preferable from the viewpoint of dispersion stability of the self-dispersing polymer particles of the present invention in water.

The amount of the basic compound to be used is preferably from 5 to 120 mol%, more preferably from 10 to 110 mol%, and still more preferably from 15 to 100 mol%, with respect to 100 mol% of the dissociative group. When the amount of the basic compound is 15 mol% or more, an effect of stabilizing the dispersion of the particles in water can be obtained. When the amount of the basic compound is 100 mol% or less, an effect of decreasing the amount of the water-soluble component can be obtained.

In the substep (2), the organic solvent is removed, by distillation, from the dispersion obtained in the substep (1) using a common method such as distillation under reduced pressure, whereby phase inversion into an aqueous system occurs and an aqueous dispersion of the self-dispersing polymer particles is obtained. The organic solvent has substantially been removed from the obtained aqueous dispersion, and the amount of the remaining organic solvent is preferably 0.2 % by mass or less, and more preferably 0.1 % by mass or less.

The average particle diameter of the self-dispersing polymer particles is preferably in the range of from 10 nm to 400 nm, more preferably in the range of from 10 nm to 200 nm, still more preferably from 10 nm to 100 nm, in terms of volume average particle diameter. When the volume average particle diameter is 10 nm or more, the suitability for production is improved. When the volume average particle diameter is 400 nm or less, storage stability is improved.

The particle size distribution of the self-dispersing polymer particles is not particularly limited, and may be a broad particle size distribution or a mono-dispersed particle size distribution. It is possible to use a mixture of two or more types of water-insoluble particles.

The average particle diameter and particle size distribution of the self-dispersing polymer particles is obtained by measuring the volume average particle diameters of the particles by a dynamic light scattering method using NANOTRAC particle size analyzer UPA-EX150 manufactured by Nikkiso Co., Ltd.

The glass transition temperature (Tg) of the self-dispersing polymer is preferably 30 °C or more, more preferably 40 °C or more, and still more preferably 50 °C or more, from the viewpoint of the storage stability of the ink composition.

It is possible to use either one type of self-dispersing polymer particles or a mixture of two or more types of self-dispersing polymer particles.
The content of the self-dispersing polymer particles in the ink composition is preferably from 1 to 30 % by mass, and more preferably from 5 to 15 % by mass, with respect to the mass of the ink composition, from the viewpoint of aggregation speed, image gloss, and the like.
In the ink composition, the content ratio of pigment to self-dispersing polymer particles (for example, water-insoluble pigment particles/self-dispersing polymer particles) is preferably in the range of from 1/0.5 to 1/10, and more preferably in the range of from 1/1 to 1/4, from the viewpoint of, for example, rubbing resistance of an image.

### (Polymerizable Compound)

In the present invention, the ink composition includes at least one water-soluble polymerizable compound that undergoes polymerization when irradiated with an active energy radiation. The polymerizable compound is used together with the pigment and polymer particles described above, and, when the ink composition is contacted with the treatment liquid and coagulated, the polymerizable compound is incorporated into a space among particles, and is polymerized and cured to strengthen an image.

"Water-soluble" as used herein refers to an ability to dissolve in water at a concentration that is equal to or more than a certain level, and may refer to an ability to dissolve in an aqueous ink (preferably uniformly). The dissolution in an ink, which is preferably uniform dissolution, may be achieved by an increase in solubility caused by addition of the below-mentioned water-soluble organic solvent. Specifically, "water-soluble" preferably refers to a water-solubility of at least 10 % by mass, and more preferably a water-solubility of at least 15% by mass.

From the viewpoint of avoiding inhibition of a reaction between a coagulant and the pigment or the polymer particles, the polymerizable compound is preferably a nonionic or cationic polymerizable compound, and a polymerizable compound having water-solubility of at least 10% by mass (more preferably water-solubility of at least 15 % by mass) is preferable.
The nonionic polymerizable monomer may be a polymerizable compound such as an acrylic monomer.

Examples of the acrylic monomer include N,N-dimethylaminoethyl methacrylate, N,N-dimethylaminoethyl acrylate, N,N-dimethylaminopropyl methacrylate, N,N-dimethylaminopropyl acrylate, N,N-dimethylamino acrylamide, N,N-dimethylamino methacrylamide, N,N-dimethylaminoethyl acrylamide, N,N-dimethylaminoethyl methacrylamide, N,N-dimethylaminopropyl acrylamide, N,N-dimethylaminopropyl methacrylamide, and quaternized compounds thereof; and a (meth)acrylic ester of a polyhydric alcohol, a (meth)acrylic ester of a glycidiyl ether of a polyhydric alcohol, a (meth)acrylic ester of polyethylene glycol, a (meth)acrylic ester of an ethylene oxide adduct of a polyhydric alcohol, and a UV-curable monomer or oligomer such as a reaction product between a polybasic acid anhydride and a hydroxyl-group-containing (meth)acrylic ester.

The polyhydric alcohol may have a chain therein that is elongated by an ethylene oxide chain formed by addition of ethylene oxide.

Specific examples (nonionic compounds 1 to 4) of the nonionic polymerizable compound include, but are not limited to, those shown below.

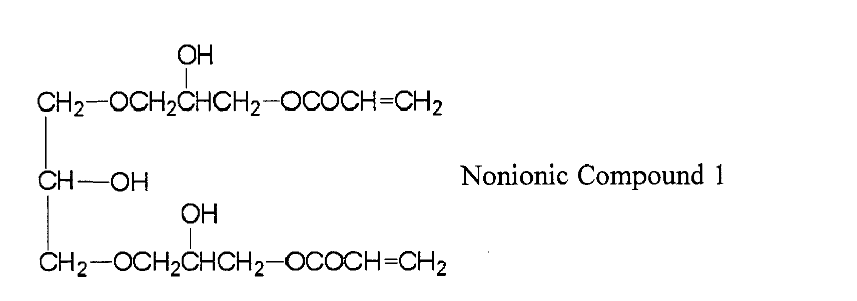

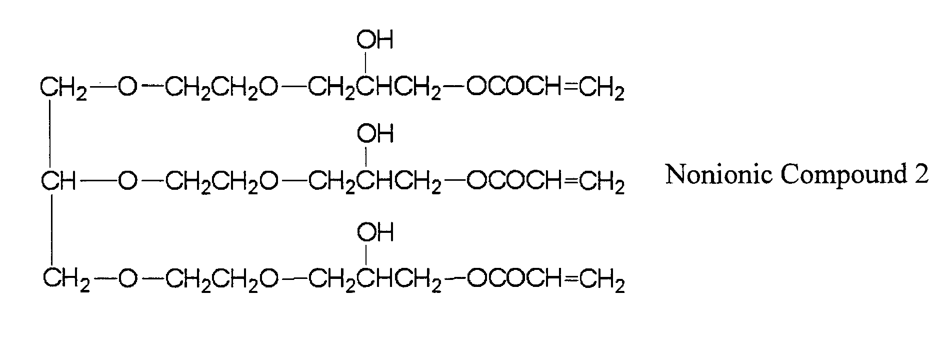

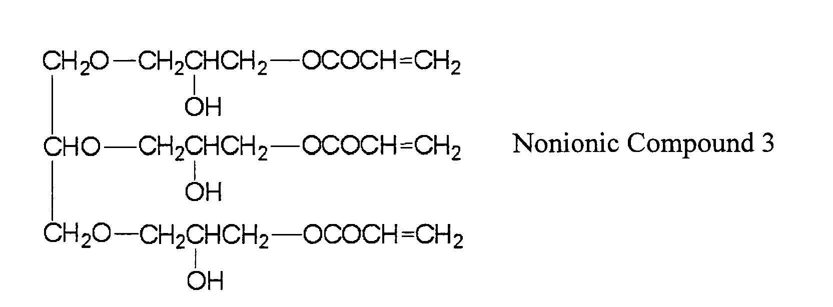

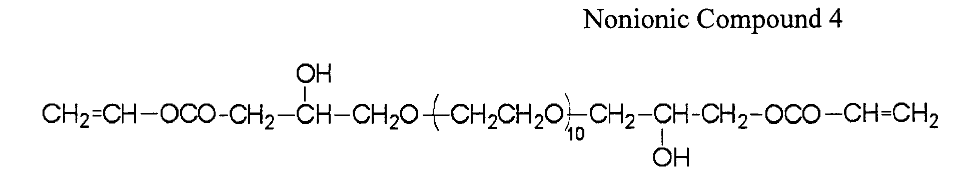

The nonionic polymerizable compound may be an acrylic ester having two or more acryloyl groups in a molecule thereof that may be derived from a compound having multiple hydroxyl groups. Examples of the compound having multiple hydroxyl groups include: a condensate of a glycol; an oligoether; and an oligoester.

Examples of the nonionic polymerizable compound further include an acrylic or methacrylic ester of a polyol having two or more hydroxyl groups such as monosaccharide or disaccharide; and a (meth)acrylic ester of triethanolamine, diethanolamine, trishydroxyaminomethane, trishydroxyaminoethane, or the like. Specific examples thereof include, but are not limited to, those shown below (Nonionic Compounds a to k)

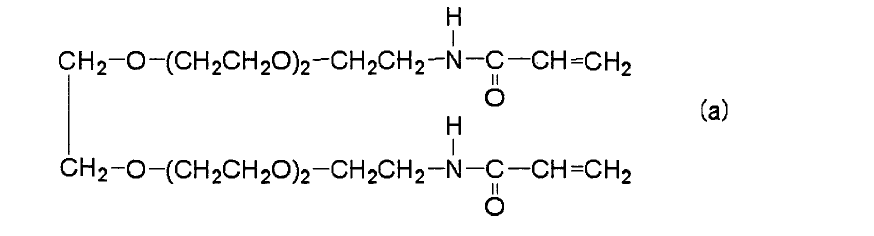

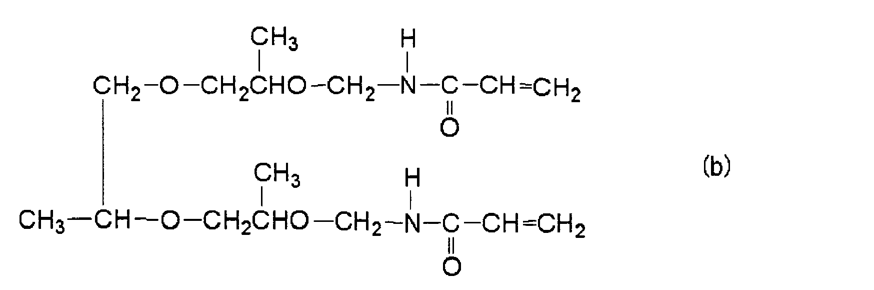

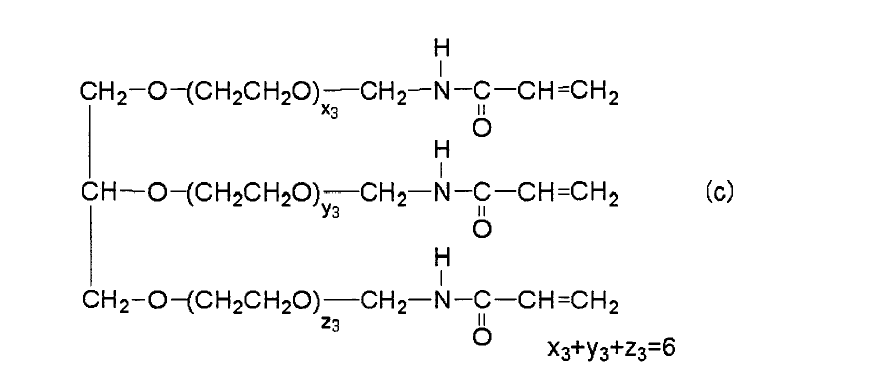

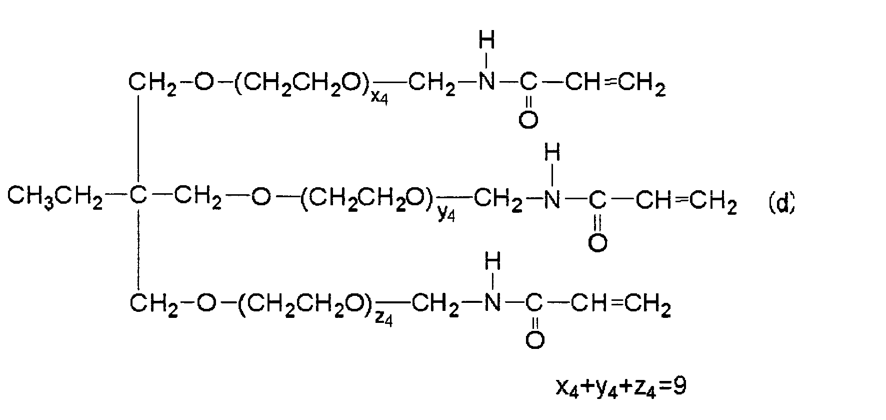

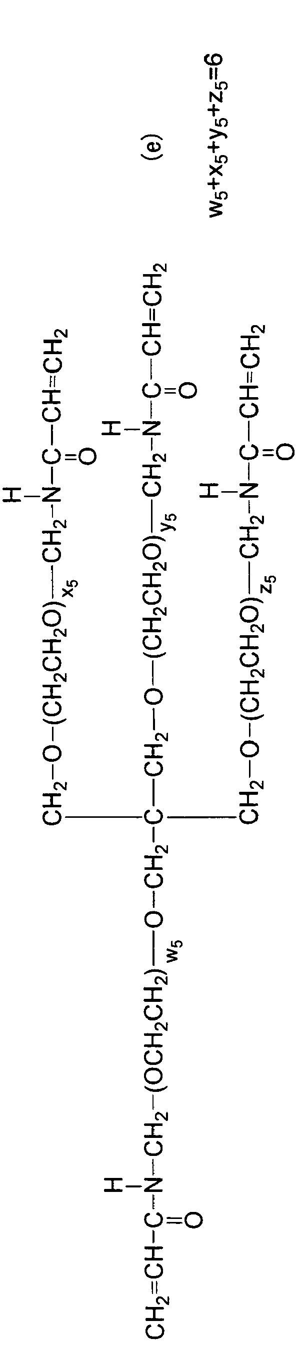

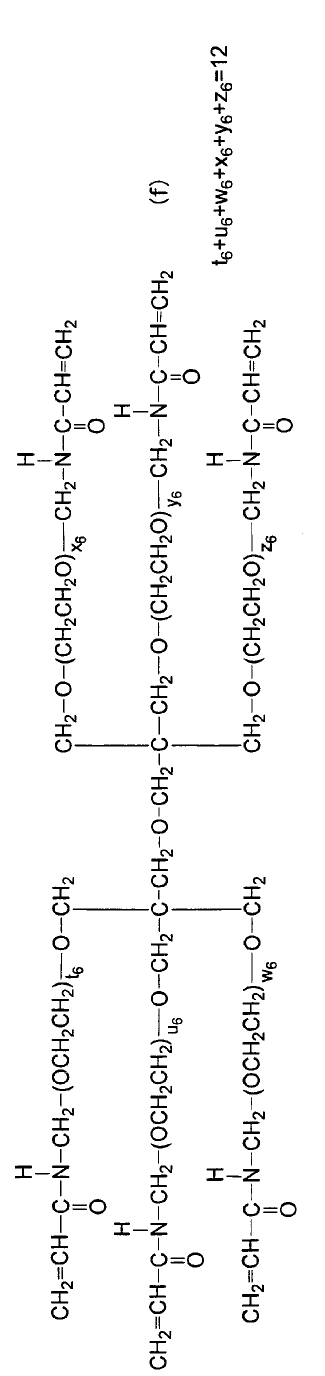

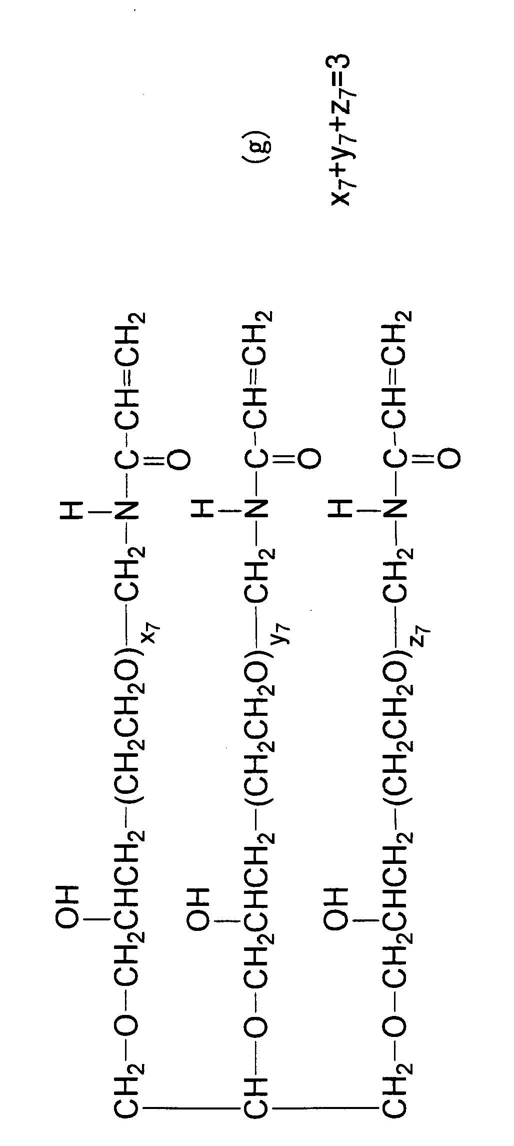

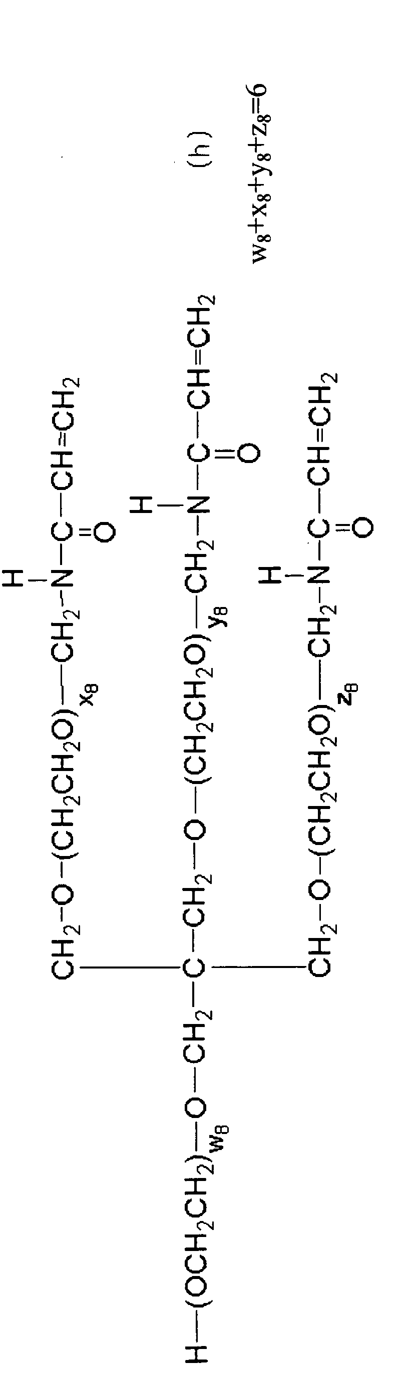

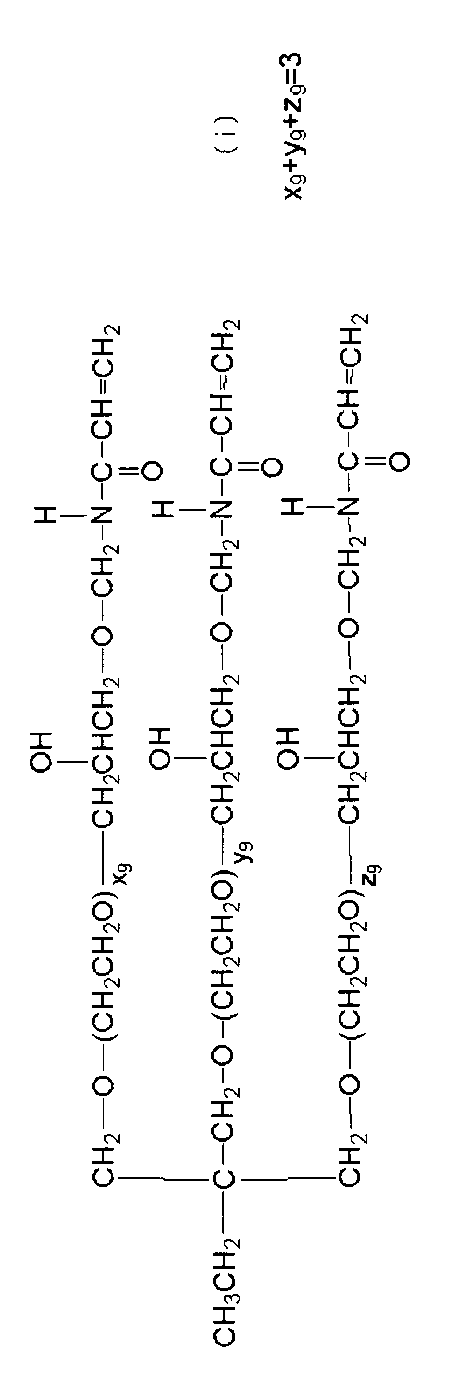

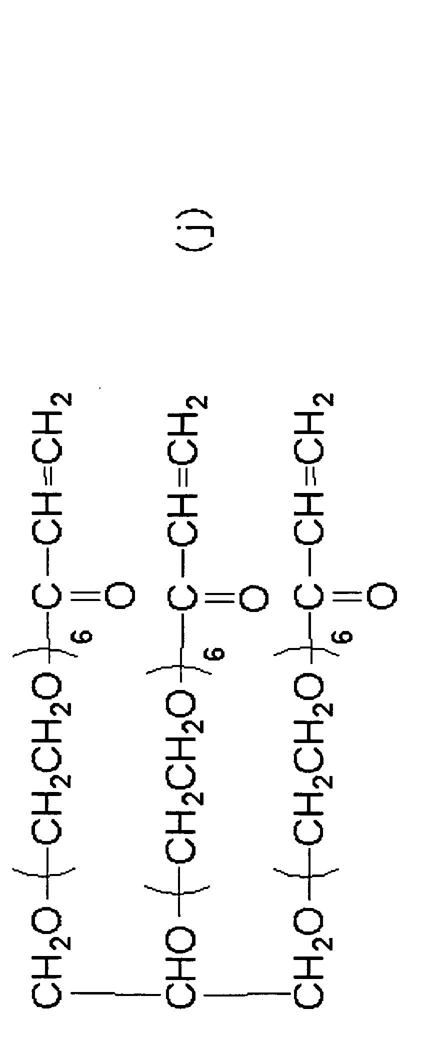

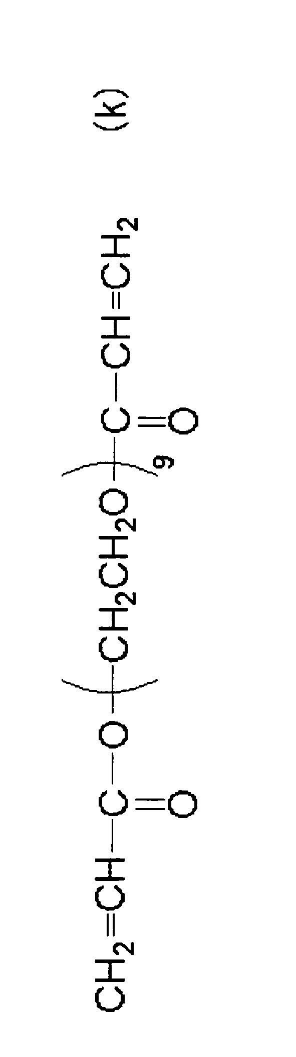

The aforementioned cationic polymerizable compound is a compound having a cationic group and a polymerizable group such as an unsaturated double bond, and suitable examples thereof include an epoxy monomer and an oxetane monomer. When the cationic polymerizable compound is included in the ink composition, the cationic property of the ink composition is increased by the presence of the cationic group, whereby intermixing of colors is more effectively prevented when an anionic ink is used.

Examples of the epoxy monomer include a glycidyl ether of a polyhydric alcohol, a glycidyl ester, and an aliphatic cyclic epoxide.
Examples of the cationic polymerizable compound include those having the following structures.

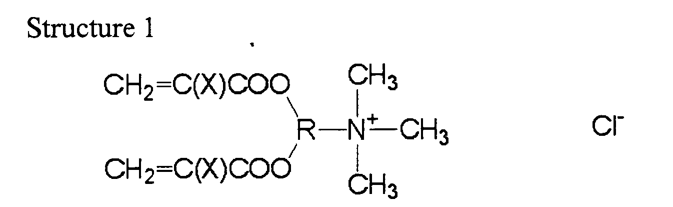

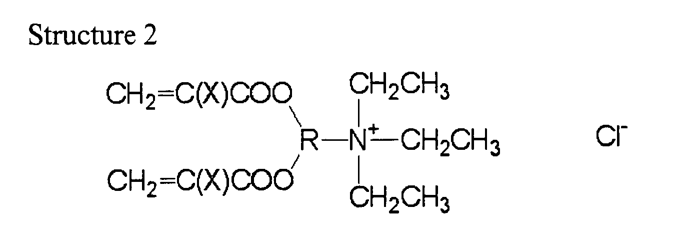

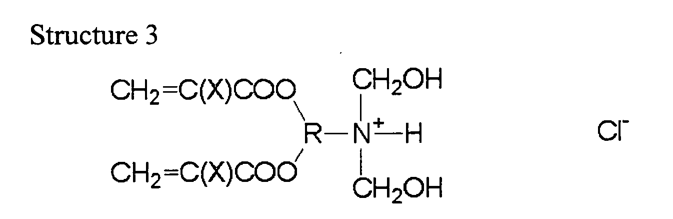

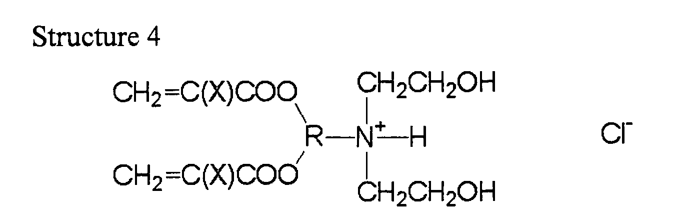

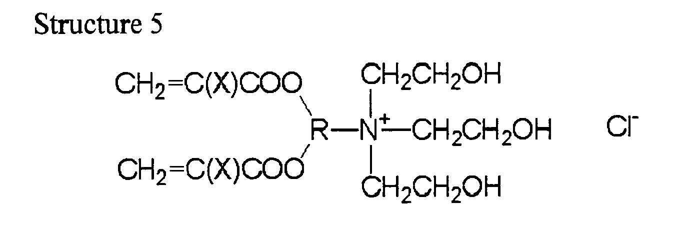

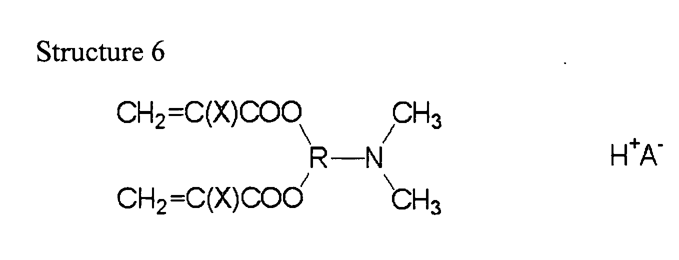

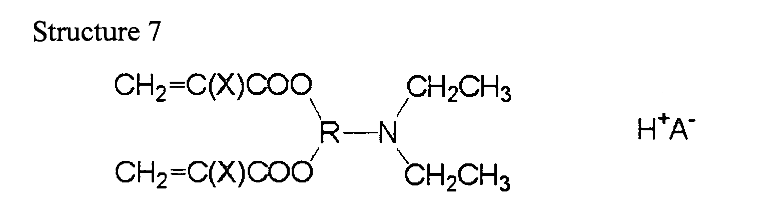

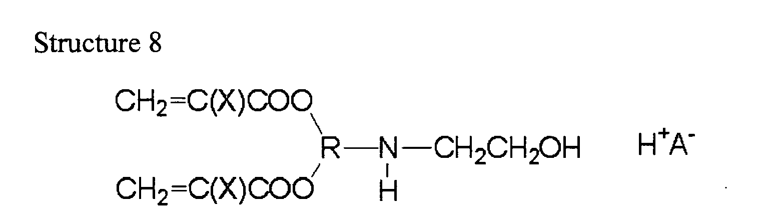

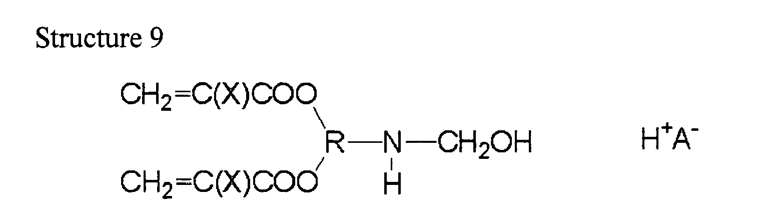

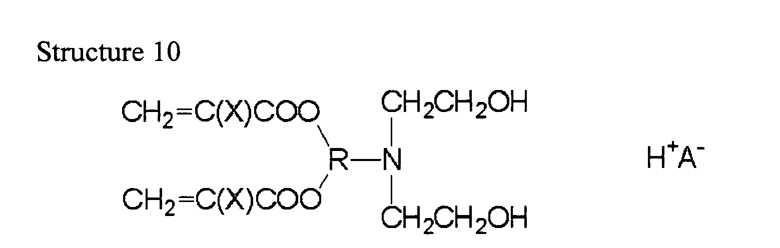

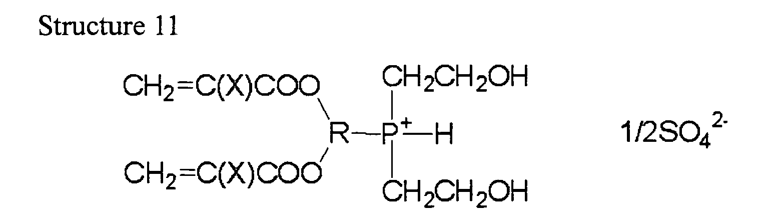

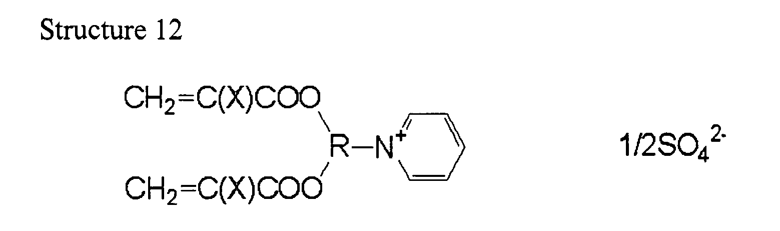

In the above structures, R represents a polyol residue; X represents H or CH₃; A⁻ represents Cl⁻, HSO₃⁻, or CH₃COO⁻. Examples of a compound used for introducing the polyol include glycerine, 1,2,4-butanetriol, 1,2,5-pentanetriol, 1,2,6-hexanetriol, trimethylolpropane, trimethylolmethane, trimethylolethane, pentaerhythritol, bisphenol A, alicyclic bisphenol A, and condensates thereof.

Specific examples of the polymerizable compound having a cationic group include those shown below (Cationic Compounds 1 to 11).

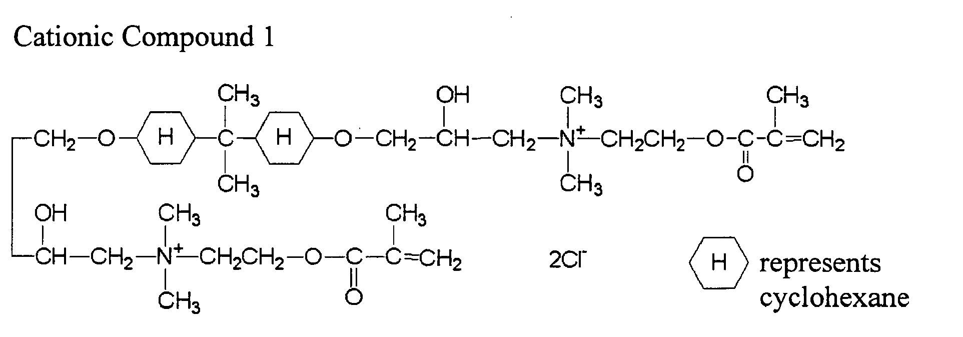

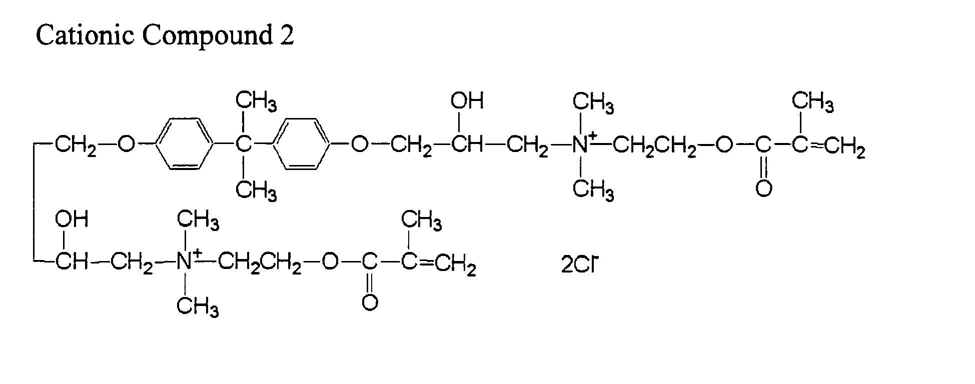

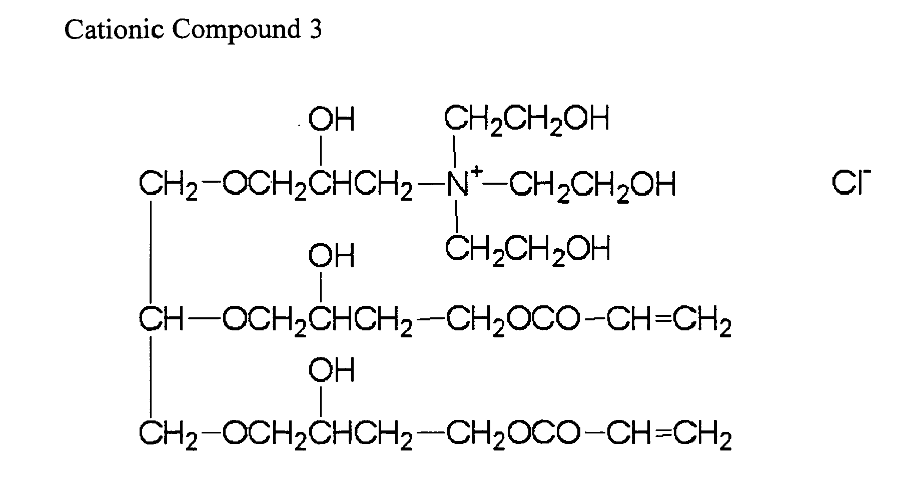

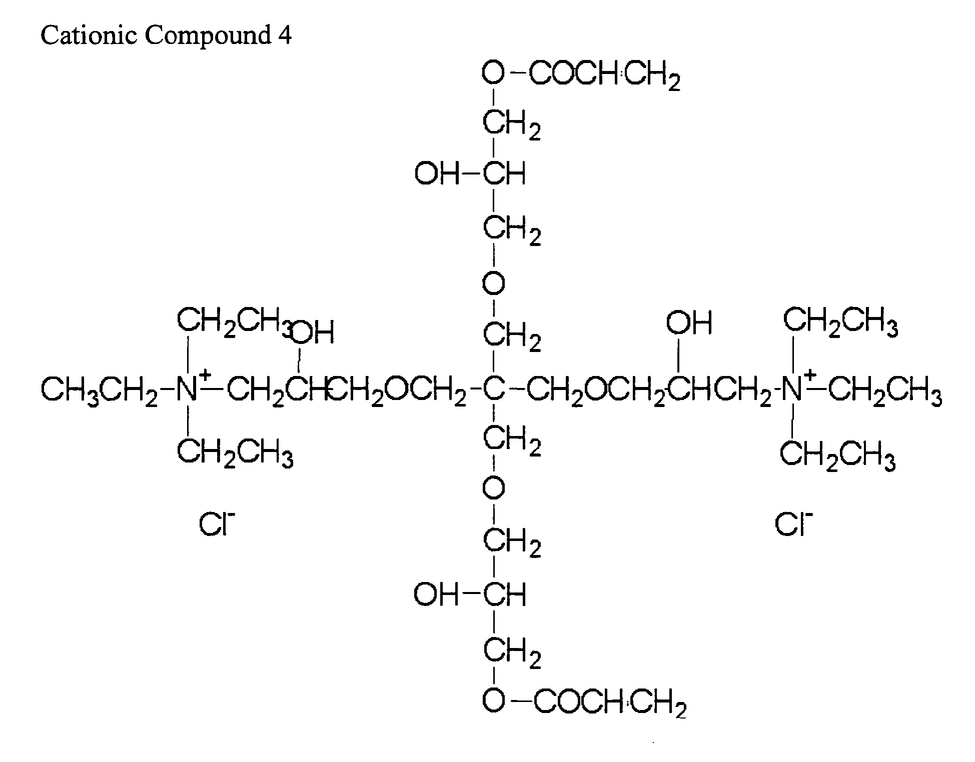

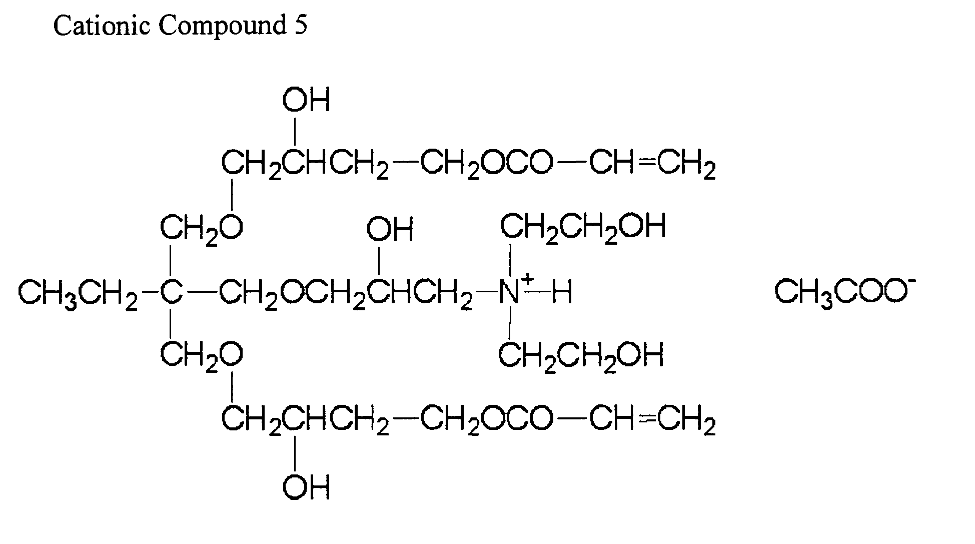

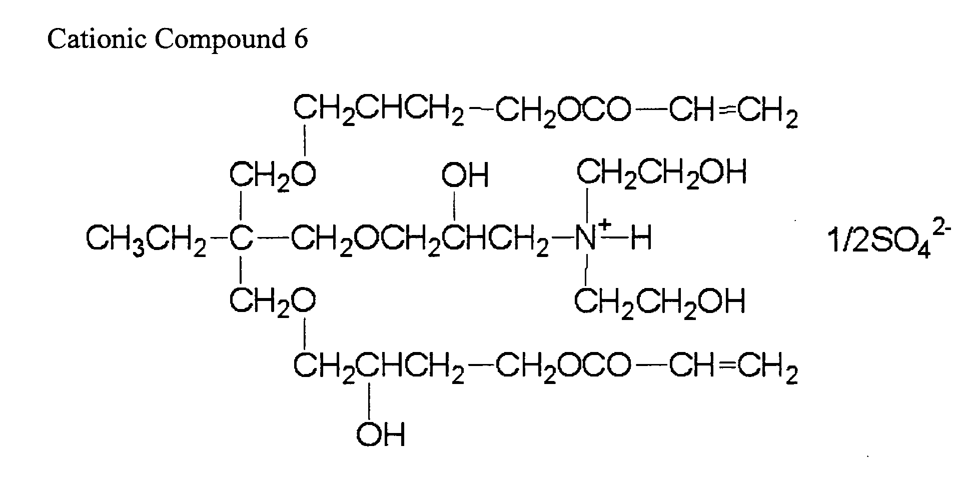

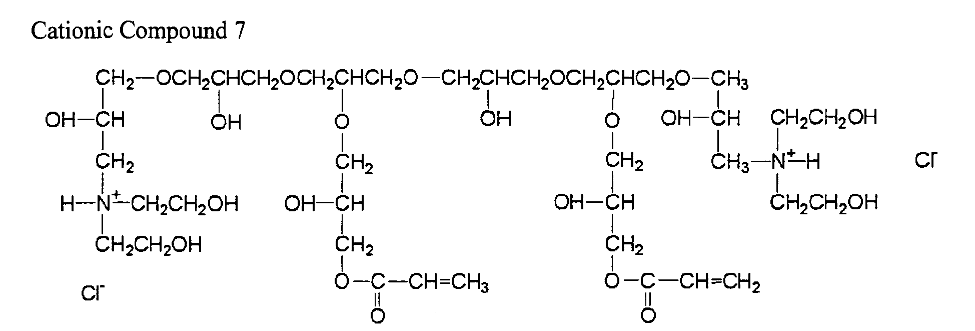

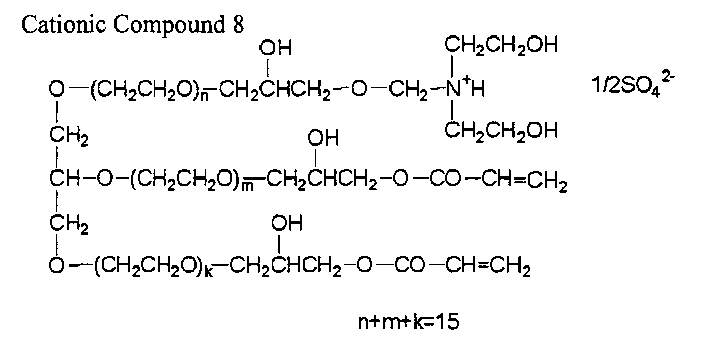

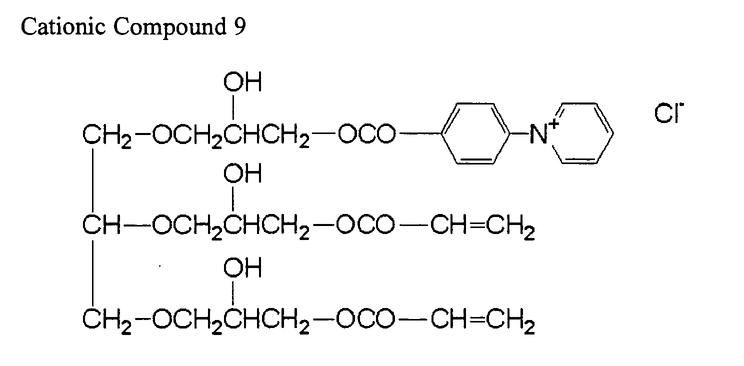

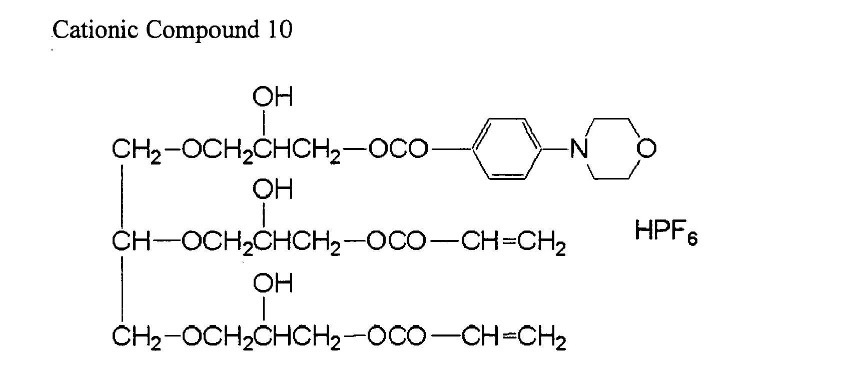

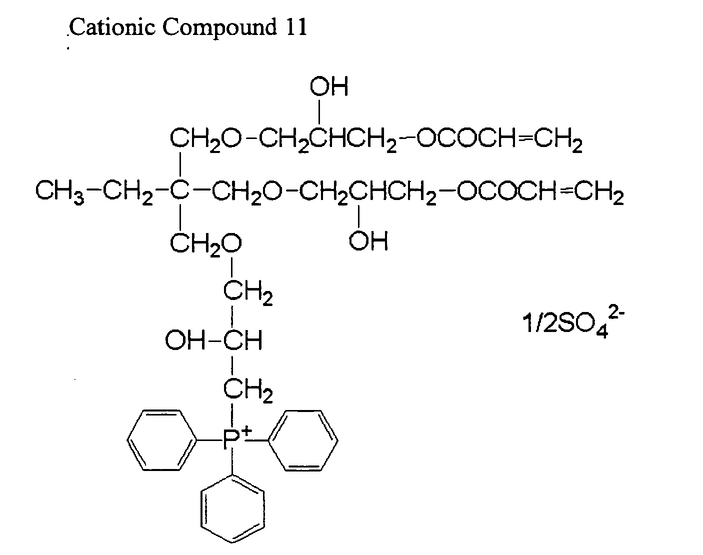

In the present invention, the polymerizable compound is preferably a multifunctional monomer, and more preferably a difunctional to hexafunctional monomer, from the viewpoint of increasing rubbing resistance. From the viewpoint of achieving both of satisfactory solubility and satisfactory rubbing resistance, the polymerizable compound is preferably a difunctional to tetrafunctional monomer.
The polymerizable compound included in the ink composition may be a single polymerizable compound, or the ink composition may include two or more polymerizable compounds.

The content of the polymerizable compound in the ink composition is preferably from 30 to 300 % by mass, and more preferably from 50 to 200 % by mass, with respect to the total of the solid contents of the pigment and the polymer particles. When the content of the polymerizable compound is 30 % by mass or more, image strength is improved and rubbing resistance of an image is excellent. A content of the polymerizable compound of 300 % by mass or less is preferable in terms of pile height.

### (Initiator)

In the present invention, the ink composition may include at least one initiator that initiates polymerization of the polymerizable compound when irradiated with an active energy radiation. The below-mentioned treatment liquid may also include an initiator, or may be a liquid not containing an initiator. The photopolymerization initiator may be used singly or in a mixture of two or more thereof. The photopolymerization initiator may be used together with a sensitizer.

The initiator may be appropriately selected from compounds that can initiate a polymerization reaction when irradiated with an active energy radiation, and examples thereof include an initiator, such as a photopolymerization initiator, that generates an active species (for example, a radical, an acid, or a base) when irradiated with a radiation or light or an electron beam.

Examples of the photopolymerization initiator include acetophenone, 2,2-diethoxyacetophenone, p-dimethylaminoacetophenone, p-dimethylaminopropiophenone, benzophenone, 2-chlorobenzophenone, p,p'-dichlorobenzophenone, p,p'-bisdiethylaminobenzophenone, Michler's ketone, benzil, benzoine, benzoin methyl ether, benzoin ethyl ether, benzoin isopropyl ether, benzoin n-propyl ether, benzoin isobutyl ether, benzoin n-butyl ether, benzil dimethyl ketal, tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexyl phenyl ketone, 1-[4-(2-hydroxyethoxy)-phenyl] -2-hydroxy-2-methyl-1-propane-1-one, 2-hydroxy-2-methyl-1-phenyl-1-one, 1-(4-isopropylphenyl)-2-hydroxy-2-methylpropane-1-one, and methyl benzoyl formate. Further examples include an aromatic diazonium salt, an aromatic halonium salt, an aromatic sulfonium salt, and a metallocene compound, such as triphenylsulfonium hexafluorophosphate or diphenyliodonium hexafluoroantimonate.

When the ink composition includes an initiator, the content of the initiator in the ink composition may be from 1 to 40 % by mass, and more preferably from 5 to 30 % by mass, with respect to the amount of the polymerizable compound. When the content of the initiator is 1 % by mass or more, the rubbing resistance of an image is further improved,
which is preferable in high-speed recording. A content of the initiator of 40 % by mass or less is preferable in terms of jetting stability.

Examples of the sensitizer include an amine-containing compound such as an aliphatic amine, an amine having an aromatic group, or piperidine; a urea such as an allyl-containing urea or o-tolylthiourea; a sulfur-containing compound such as sodium diethyldithiophosphate or a soluble salt of an aromatic sulfinic acid; a nitrile-containing compound such as N,N-disubstituted p-aminobenzonitrile; a phosphorus-containing compound such as tri-n-butylphosphine or sodium diethyl dithiophosphate; a nitrogen-containing compound such as Michler's ketone, a N-nitrosohydroxylamine derivative, an oxazolidine compound, a tetrahydro-1,3-oxazine compound, or a condensate of a diamine with formaldehyde or acetoaldehyde; a chlorine-containing compound such as carbon tetrachloride or hexachloroethane; a high-molecular-weight amine that is a reaction product of an epoxy resin and an amine; and triethanolamine triacrylate.
The sensitizer may be contained so far as the effects of the present invention are not impaired.

### (Water-soluble organic solvent)

The ink composition used in the present invention may include at least one kind of water-soluble organic solvent. By including the water-soluble organic solvent, effects of drying prevention, moistening, promoting penetration or the like may be obtained. In order to prevent drying, the solvent may be used as a anti-drying agent for preventing nozzle clogging due to aggregation of ink that has attached and dried at an ejection port of a jetting nozzle. In terms of drying prevention or moistening, a water-soluble organic solvent having a lower vapor pressure than that of water is preferably used. In terms of promoting penetration, the solvent may be used as a penetration promoter for improving the penetration ability of ink into a recording medium.

As an anti-drying agent, the water-soluble organic solvent preferably has a lower vapor pressure than that of water. Examples of such a solvent include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin and trimethylol propane; lower alkyl ethers of polyhydric alcohols, such as ethylene glycol monomethyl ether, ethylene glycol monoethyl ether, diethylene glycol monomethyl ether, diethylene glycol monoethyl ether, triethylene glycol monoethyl ether and triethylene glycol monobutyl ether; heterocyclic compounds such as 2-pyrrolidone, N-methyl-2-pyrrolidone, 1,3-dimethyl-2-imidazolidinone and N-ethyl morpholine; sulfur-containing compounds such as sulfolane, dimethyl sulfoxide and 3-sulfolene; polyfunctional compounds such as diacetone alcohol and diethanol amime; and urea derivatives.
Among these, polyhydric alcohols such as glycerin and diethylene glycol are preferable as anti-drying agents.
The anti-drying agent may be used singly or in combination of two or more thereof.
The content of anti-drying agent in the ink composition is preferably from 10 to 50 mass%.

As the penetration promoter, the water-soluble organic solvent is favorably used in order to promote the penetration of ink composition into a recording medium (such as printing paper). Examples of such a solvent include alcohols such as ethanol, isopropanol, butanol, diethylene glycol monobutyl ether, triethylene glycol monobutyl ether and 1,2-hexanediol, sodium lauryl sulfate, sodium oleate, and nonionic surfactants.

The penetration promoter may be used singly or in combination of two or more thereof. The content of penetration promoter in the ink composition is preferably from 5 to 30 mass%. The penetration promoter is used preferably at an amount in a range in which image bleeding or print through is not caused.

The water-soluble organic solvent may be used also for adjusting the viscosity of the ink composition. Examples of the water-soluble organic solvent that may be used as a viscosity adjuster include alcohols such as methanol, ethanol, propanol, isopropanol, butanol, isobutanol, sec-butanol, t-butanol, pentanol, hexanol, cyclohexanol and benzyl alcohol; polyhydric alcohols such as ethylene glycol, diethylene glycol, triethylene glycol, polyethyelene glycol, propylene glycol, dipropylene glycol, polypropylene glycol, butylene glycol, hexanediol, pentanediol, glycerin, hexanetriol and thiodiglycol; glycol derivatives such as ethylene glycol monomethyl ether, ethylene glycol monoethyl ether, ethyelene glycol monobutyl ether, diethyelene glycol monomethyl ether, diethylene glycol monobutyl ether, propylene glycol monomethyl ether, propylene glycol monobutyl ether, dipropylene glycol monomethyl ether, triethyelene glycol monomethyl ether, ethylene glycol diacetate, ethylene glycol monomethyl ether acetate, triethylene glycol monomethyl ether, triethylene glycol monoethyl ether and ethylene glycol monophenyl ether; amines such as ethanol amine, diethanol amine, triethanol amine, N-methyl diethanol amine, N-ethyl diethanol amine, morpholine, N-ethyl morpholine, ethylene diamine, diethylene triamine, triethylene tetramine, polyethylene imine and tetramethyl propylene diamine; and other polar solvents such as formamide, N,N-dimethyl formamide, N,N-dimethyl acetoamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone. Any of these solvents may be used singly or in combination of two or more thereof.

### (Water)

The ink composition includes water, and the content of water in the ink composition is not particularly limited. The content of water in the ink composition is preferably from 10 to 99% by mass, more preferably from 30 to 80% by mass, and still more preferably from 50 to 70% by mass.

### (Other additives)

The ink composition used in the present invention may further include other additives than the aforementioned components, such as known additives including an anti-drying agent (moistener), an anti-fading agent, an emulsion stabilizer, a penetration enhancing agent, a UV absorber, an antiseptic agent, an antimildew agent, a pH adjuster, a surface-tension controller, an antifoam agent, a viscosity adjuster, a dispersant, a dispersion stabilizer, an antirust agent and a chelating agent. When these additives are added to the ink composition, they are usually directly added to the ink composition. When a dispersion of an oily dye is used, these additives are usually added to the dispersion after the preparation of the dye dispersion. However, these additives may be added to an oil phase or aqueous phase during the preparation of the dye dispersion.

The use of the UV absorber may improve the storability of an image, and examples of the UV absorber include: benzotriazole compounds such as those described in JP-ANos. 58-185677, 61-190537, 2-782, 5-197075 and 9-34057; benzophenone compounds such as those described in JP-A Nos. 46-2784 and 5-194483 and US Patent No. 3,214,463; cinnamic compounds such as those described in Japanese Patent Nos. 48-30492 and 56-21141 and JP-A No. 10-88106; triazine compounds such as those described in JP-A No. 4-298503, 8-53427, 8-239368, 10-182621 and 8-501291; compounds described in Research Disclosure No. 24239; and so-called fluorescent brighteners that emit fluorescent light upon absorption of UV rays, such as stilbene compounds and benzoxazole compounds.

The anti-fading agent may be used for improving the storability of an image, and examples thereof include an organic anti-fading agent and a metal complex anti-fading agent. Examples of the organic anti-fading agent include hydroquinones, alkoxyphenols, dialkoxyphenols, phenols, anilines, amines, indanes, chromanes, alkoxyanilines and heterocyclic compounds. Examples of the metal complex anti-fading agent include nickel complexes and zinc complexes. More specifically, examples of usable anti-fading agents include those described in the patents cited in Research Disclosure No. 17643, Section VII, Items I to J; Research Disclosure No. 15162; Research Disclosure No. 18716, page 650, left column; Research Disclosure No. 36544, page 527; Research Disclosure No. 307105, page 872; Research Disclosure No. 15162; and compounds within the scope of the chemical formulae and examples of representative compounds described in pages 127 to 137 of JP-A No. 62-215272.

Examples of the antimildew agent include sodium dehydroacetate, sodium benzoate, sodium pyridinethion-1-oxide, ethyl p-hydroxybenzoate, 1,2-benzoisothiazolin-3-one, and salts thereof. The content of the antimildew agent is preferably from 0.02 to 1.00 mass% with respect to the ink composition.

Examples of the pH adjuster include a neutralizer such as an organic base or an inorganic alkali. The pH adjuster may improve the storability of the ink composition. The pH adjuster is preferably added at such an amount that the pH of the ink composition becomes from 6 to 10, more preferably from 7 to 10.

Examples of the surface-tension controller include nonionic surfactants, cationic surfactants, anionic surfactants, and betaine surfactants.

The surface-tension controller is preferably added in such an amount that the surface tension of the ink composition is from 20 to 60 mN/m, more preferably from 20 to 45 mN/m, and further preferably from 25 to 40 mN/m. When the surface-tension controller is added in an amount in the above range, the ink composition may be spotted in a favorable manner using an inkjet method.

Examples of the surfactants include, as hydrocarbon surfactants, anionic surfactants such as fatty acid salts, alkyl sulfates, alkyl benzene sulfonates, alkyl naphthalene sulfonates, dialkyl sulfosucciniates, alkyl phosphates, formalin condensates of naphthalene sulfonates, and polyoxyethylene alkyl sulfates; and nonionic surfactants such as polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkyl amines, glycerin fatty acid esters, and oxyethylene-oxypropylene block copolymers. Further, acetylene-type polyoxyethyleneoxide surfactants, such as SURFYNOL series (trade name, manufactured by Air Products & Chemicals, Inc.), and amine oxide-type amphoteric surfactants such as N,N-dimethyl-N-alkylamine oxide are also favorably used.
Moreover, compounds described as a surfactant in JP-A No. 59-157636, pp. 37 to 38 and Research Disclosure No. 308119 (1989) are also applicable.

The anti-abrasion properties may be improved by using fluorine (fluoroalkyl) surfactants, silicone surfactants or the like, such as those described in JP-A No. 2003-322926, 2004-325707 and 2004-309806.
The aforementioned surface-tension controller may also be used as an antifoam agent, and fluorine compounds, silicone compounds, chelate compounds such as EDTA may be used.

### -Treatment Liquid-

The treatment liquid includes at least a coagulant that coagulates the aforementioned components of the ink composition and a polymerizable compound that undergoes polymerization when irradiated with an active energy radiation, and optionally includes other components as necessary. Since the treatment liquid is used with the ink composition, inkjet recording can be performed at a higher speed, and an image excellent in printing properties with high density and high resolution (including reproducibility of thin lines and minute portions) is obtained even when recording is performed at high speed.

### (Coagulant)

The coagulant may be a compound that can change the pH value of the ink composition, a polyvalent metal salt, or a polyallylamine. In the present invention, a compound that can change the pH value of the ink composition is preferable, and a compound that can decrease the pH value of the ink composition is more preferable, from the viewpoint of coagulation properties of the ink composition.

The compound that can decrease the pH value of the ink composition may be an acidic substance. Suitable examples of the acidic substance include sulfuric acid, hydrochloric acid, nitric acid, phosphoric acid, polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumalic acid, thiophenecarboxylic acid, nicotinic acid, and derivatives thereof, and salts thereof.
The acid substance may be used singly, or in combination of two or more thereof.

In the present invention, when the treatment liquid includes an acidic substance, the pH value of the treatment liquid at 25°C is preferably 6 or less, and more preferably 4 or less. In particular, the pH value of the treatment liquid at 25°C is preferably from 0.5 to 4, more preferably from 1 to 4, and particularly preferably from 1 to 3. In such a case, the pH value of the ink composition at 25°C is preferably 7.5 or more, and more preferably 8.0 or more.

In particular, it is preferable that the pH value of the ink composition at 25°C is 8.0 or more and the pH value of the treatment liquid at 25°C is from 0.5 to 4, from the viewpoint of image density, resolution, and inkjet recording at higher speed.

Examples of the polyvalent metal salt include a salt of any of the following: an alkaline earth metal, which belongs to Group 2 of the Periodic Table, such as magnesium or calcium; a transition metal belonging to Group 3 of the Periodic Table, such as lanthanum; a metal belonging to Group 13 of the Periodic Table, such as aluminum; and a lanthanide, such as neodymium. The salt of such a metal is preferably a carboxylic acid salt (such as a formate, acetate, or benzoate), a nitrate, a chloride, or a thiocyanate. In particular, the following salts are preferable: a calcium or magnesium salt of a carboxylic acid (such as formic acid, acetic acid, or benzoic acid); a calcium or magnesium salt of nitric acid; calcium chloride; magnesium chloride; and a calcium or magnesium salt of thiocyanic acid.

In the present invention, the coagulant is preferably an acidic substance having high solubility in water, and is preferably an organic acid with a view to increasing coagulation properties and immobilizing the entire ink. The coagulant is more preferably a di- or higher-valent organic acid, and still more preferably a divalent or trivalent acidic substance. The di- or higher-valent organic acid is preferably an organic acid having a first pKa of 3.5 or less, and more preferably an organic acid having a first pKa of 3.0 or less. Examples thereof include phosphoric acid, oxalic acid, malonic acid, and citric acid.

The coagulant may be used singly, or in combination of two or more thereof. The content of the coagulant, which coagulates the ink composition, in the treatment liquid is preferably from 1 to 50% by mass, more preferably from 3 to 45 % by mass, and still more preferably from 5 to 40 % by mass.

### (Polymerizable Compound)

In the present invention, the treatment liquid includes at least one water-soluble polymerizable compound that undergoes polymerization when irradiated with an active energy radiation (second water-soluble polymerizable compound), while the ink composition includes a water-soluble polymerizable compound (first water-soluble polymerizable compound). The first and second water-soluble polymerizable compounds may be the same as each other or different from each other. Since the (second) water-soluble polymerizable compound that undergoes polymerization when irradiated with an active energy radiation is contained in the treatment liquid and the (first) water-soluble polymerizable compound is contained in the ink composition, when the treatment liquid contacts with the ink composition, the water-soluble polymerizable compounds are incorporated into a space among particles formed by aggregation of the pigment and the polymer particles contained in the ink composition, and the rubbing resistance of an image after polymerization and curing can be improved more efficiently.

The (second) water-soluble polymerizable compound that undergoes polymerization when irradiated with an active energy radiation and that is contained in the treatment liquid may be selected from compounds that can be used as the (first) water-soluble polymerizable compound that undergoes polymerization when irradiated with an active energy radiation and that is contained in the ink composition described above, and preferable ranges and examples of the second water-soluble polymerizable compound are the same as those of the first water-soluble polymerizable compound.

The polymerizable compound may be used singly, or in combination of two or more thereof. The content of the water-soluble polymerizable compound, which undergoes polymerization when irradiated with an active energy radiation, in the treatment liquid is preferably from 3 to 60 % by mass, and more preferably from 10 to 50 % by mass. When the content of the polymerizable compound in the treatment liquid is 3 % by mass or more, the image strength is increased and excellent rubbing resistance of an image is achieved. A content of the polymerizable compound of 60 % by mass or less is preferable with a view to avoiding adverse effects to surface properties (such as gloss) of a recording medium.

The treatment liquid may include other additives as additional components, as long as the effects of the present invention are not impaired. Examples of other additives include known additives, such as an anti-drying agent (moistening agent), an anti-fading agent, an emulsion stabilizer, a penetration enhancing agent, a UV absorber, an antiseptic agent, an antimildew agent, a pH adjuster, a surface-tension controller, an antifoam agent, a viscosity adjuster, a dispersant, a dispersion stabilizer, an antirust agent, and a chelating agent.

As an ink set according to the present invention, a combination of the following is preferable:
an ink composition including (i) a water-dispersible pigment covered with a polymer dispersant having a carboxyl group and an acid value of 100 mgKOH/g or less, (ii) particles of a self-dispersing polymer having an acid value of 50 mgKOH/g or less, and (iii) a trifunctional, tetrafunctional, or pentafunctional, nonionic or cationic water-soluble monomer as a polymerizable compound, and
a treatment liquid including an organic acid and a trifunctional, tetrafunctional, or pentafunctional, nonionic or cationic water-soluble monomer as a polymerizable compound.

A combination of the following is more preferable:
an ink composition including (i) a water-dispersible pigment covered with a polymer dispersant having a carboxyl group and an acid value of from 25 mgKOH/g to 80 mgKOH/g, (ii) particles of a self-dispersing polymer having an acid value of from 25 mgKOH/g to 50 mgKOH/g, and (iii) a trifunctional or tetrafunctional, nonionic water-soluble acrylate monomer as a polymerizable compound, and
a treatment liquid including a di- or higher-valent organic acid and a trifunctional or tetrafunctional, nonionic water-soluble acrylate monomer as a polymerizable compound.
Particularly preferably, the particles of a self-dispersing polymer in the above combinations are particles of an acrylic resin containing structural units derived from a (meth)acrylate monomer.

<*Inkjet Recording Method*>
The inkjet recording method according to the present invention uses the aforementioned ink set of the present invention, and includes:
ink applying step of applying an ink composition onto a recording medium by an inkjet method, wherein the ink composition includes a pigment, polymer particles, and a first water-soluble polymerizable compound that undergoes polymerization when irradiated with an active energy radiation; and
a treatment-liquid applying step of applying a treatment liquid onto the recording medium wherein the treatment liquid includes a coagulant that coagulates components in the ink composition and a second water-soluble polymerizable compound that undergoes polymerization when irradiated with an active energy radiation. The first and second water-soluble polymerizable compounds may be the same as each other or different from each other. The inkjet recording method of the present invention may include one or more other processes as necessary.

In the present invention, the ink composition for forming an ink image includes polymer particles and a water-soluble polymerizable compound that can be cured through polymerization, together with a pigment; moreover, the treatment liquid also includes a water-soluble polymerizable compound that can be cured through polymerization. Due to this configuration, an image is immobilized by a coagulation reaction of the pigment and/or the polymer particles when the ink composition contacts the treatment liquid. Further, the polymer particles are present between particles of the pigment, and the polymerizable compound, which is in the state of being incorporated into a space among such particles in the immobilized image, is cured through polymerization, whereby the strength of the final image is increased. In other words, using the treatment liquid, components in the ink composition are coagulated rapidly to prevent intermixing of ink droplets, such as bleed or intercolor mixing, and, as a result, suitability for high-speed recording and effects in improving the hue and image printing properties (including reproducibility of thin lines and minute portions in an image) during high-speed recording are imparted, while the polymerizable compound enters, to an appropriate extent, into a space among the pigment particles and the polymer particles that are in a coagulated state. Since the polymerizable compound is polymerized and cured in this state, the image strength can be improved, and suitability for high-speed recording and improvement in the rubbing resistance of an image can be both achieved.
In particular, these effects are more conspicuous when image recording is performed on a coated paper as a recording medium having a surface at which the pigment tends to remain.

As the polymer particles, self-dispersing polymer particles are preferable. Use of the self-dispersing particles further improves hue and image printing properties at the time of high-speed printing. The reason therefor is possibly as follow.
In conventional methods, free emulsifying agent is incorporated when a liquid containing resin particles is prepared. In the present invention, when a self-dispersing polymer is used as a component of the ink composition, the amount of the free emulsifying agent is reduced or the free emulsifying agent is eliminated, and direct interaction of coagulation components is facilitated, so that rapid coagulation of components in the ink composition is enabled. Bleed and intercolor mixing caused by interference between ink droplets are prevented thereby, and an image having excellent hue and image printing properties (including reproducibility of thin lines and minute portions in the image) is obtained at a higher speed than conventional techniques.
In the following, the steps of the inkjet recording method of the present invention are described.

### -Ink Applying Step-

In the ink applying step, an ink composition containing a pigment, polymer particles, and a water-soluble polymerizable compound that undergoes polymerization when irradiated with an active energy radiation is applied onto a recording medium by an inkjet method. In this step, the ink composition can be applied selectively onto the recording medium, so that a desired visible image can be formed. The ink composition includes at least a pigment, polymer particles, and a water-soluble polymerizable compound, and details of the ink composition, such as details and preferred modes of the respective components, are as described above.

Specifically, the recording of an image using an inkjet method may be performed by jetting a liquid composition onto a desired recording medium by application of energy, and the recording medium is, for example, a plain paper or a resin-coated paper, such as paper exclusively for inkjet recording, a film, paper that can be used both for inkjet recording and electrophotographic recording, cloth, glass, a metal, and ceramics, and examples thereof include those described in JP-A Nos. 8-169172, 8-27693, 2-276670, 7-276789, 9-323475, 62-238783, 10-153989, 10-217473, 10-235995, 10-337947, 10-217597, and 10-337947. An inkjet recording method that is preferred in the present invention is the method described in paragraphs [0093] to [0105] of JP-ANo. 2003-306623.

The inkjet method is not particularly limited and may be any known method such as a charge-control method in which ink is jetted by electrostatic attraction force; a drop-on-demand method (pressure-pulse method) in which a pressure of oscillation of a piezo element is utilized; an acoustic inkjet method in which ink is jetted by radiation pressure generated by irradiation of ink with acoustic beams that have been converted from electric signals; and a thermal inkjet method in which ink is jetted by a pressure generated by formation of bubbles caused by heating of ink (BUBBLEJET, registered trademark). An inkjet method is described in JP-A No. 54-59936 and can be suitably used; in this method, ink is jetted from a nozzle by an acting force generated by a rapid change in volume of the ink caused by application of a thermal energy to the ink.

Further, examples of the inkjet method include a method in which a large number of small-volume droplets of an ink having a low optical density, which is called a photo ink, are jetted; a method in which inks of substantially the same color hue at different densities are used to improve image quality; and a method in which a clear and colorless ink is used.

The inkjet head used in an inkjet method may be either an on-demand type head or a continuous type head. Examples of jetting systems include electromechanical transduction systems (such as a single-cavity system, a double-cavity system, a vendor system, a piston system, a share-mode system and a shared-wall system), electrothermal transduction systems (such as a thermal inkjet system and a BUBBLE-JET (registered trademark) system), electrostatic suction systems (such as an electric-field-control system and a slit-jet system), and discharge systems (such as a spark-jet system), and any of these jetting systems is applicable.
The ink nozzles used for the inkjet recording are not particularly limited, and may be selected as appropriate according to applications.

Specific examples of the inkjet recording method include those described below.
(1) A method called electrostatic attraction system, in which a strong electric field is applied between a nozzle and an accelerating electrode disposed in front of the nozzle so as to successively jet ink droplets from the nozzle, print information signals are supplied to deflection electrodes while the ink droplets pass a gap between the deflection electrodes so that the ink droplets are jetted towards a recording medium, and the ink is fixed on the recording medium to record an image, or in which ink droplets are jetted from a nozzle towards a recording medium, without being deflected, according to print information signals and an image is thereby fixed on the recording medium

(2) A method in which a pressure is applied to an ink liquid by a small-sized pump and an inkjet nozzle is mechanically vibrated using a crystal oscillator or the like, thereby forcibly jetting ink droplets from the nozzle. The ink droplets jetted from the nozzle is electrically charged simultaneously with the jetting, and print information signals are supplied to deflection electrodes while the ink droplets pass a gap between the deflection electrodes so as to jet the ink droplets towards a recording medium, and an image is thereby recorded on the recording medium.

(3) A piezo method, in which a pressure and print information signals are simultaneously applied to an ink liquid by a piezoelectric device, so that ink droplets are jetted from a nozzle towards a recording medium and an image is thereby recorded on the recording medium.

(4) A BUBBLE-JET (registered trademark) method, in which an ink liquid is heated and bubbled by a microelectrode according to print signal information, and the bubbles are allowed to expand so that the ink liquid is jetted from a nozzle towards a recording medium and an image is thereby recorded on the image recording medium.

Regarding the inkjet recording head, there are (i) a shuttle system in which recording is performed while a short serial head having a small length is moved in the width direction of a recording medium in a scanning manner, and (ii) a line system in which a line head having recording devices that are aligned correspondingly to the entire length of one side of a recording medium is used. In the line system, image recording can be performed over the whole of one surface of a recording medium by moving the recording medium in a direction orthogonal to the direction along which the recording devices are aligned, and a conveyance system, such as carriage, which moves the short head in a scanning manner is unnecessary. Since a complicated scan-movement control of the movement of the carriage and the recording medium is unnecessary and only the recording medium is moved, the recording speed can be increased compared to the shuttle system. The inkjet recording method of the present invention can be applied to both of these systems; effects in improving the jetting accuracy and rubbing resistance of an image are larger when the inkjet recording method of the present invention is applied to a line system, in which dummy jetting is not generally performed.

The amount of ink per one drop jetted from an inkjet head is preferably from 1 pl to 10 pl, and more preferably from 1.5 pl to 6 pl, from the viewpoint of obtaining a high-precision image. It is also effective to jet liquid droplets of different quantities in combination, with a view to suppressing unevenness in an image and improving smoothness in continuous gradation. The present invention is effective also in such an embodiment.

### -Treatment-Liquid Applying Step-

In the treatment-liquid applying step, a treatment liquid containing a coagulant that coagulates components in the ink composition and a water-soluble polymerizable compound that undergoes polymerization when irradiated with an active energy radiation is applied to a recording medium, and the treatment liquid is brought into contact with the ink composition, thereby forming an image. In this process, dispersed particles in the ink composition, such as the pigment and the polymer particles, are aggregated, whereby the image is immobilized onto the recording medium. The treatment liquid includes at least a coagulant and a water-soluble polymerizable compound that undergoes polymerization when irradiated with an active energy radiation, and details and preferred modes of the respective components are as described above.

Application of the treatment liquid can be performed using a known method, such as a coating method, an inkjet method, or an immersion method. The coating method may be a known coating method using a bar coater, an extrusion die coater, an air doctor coater, a blade coater, a rod coater, a knife coater, a squeeze coater, a reverse roll coater, or the like. Details of the inkjet method are as described above.

The treatment-liquid applying step may be performed before or after the ink applying step using the ink composition. In the present invention, it is preferable to perform the ink applying step after the treatment liquid is applied in the treatment-liquid applying step. Specifically, in a preferable embodiment, the treatment liquid for aggregating the pigment and/or the polymer particles in the ink composition is applied on the recording medium prior to applying the ink composition, and the ink composition is applied so as to contact with the treatment liquid provided on the recording medium, whereby an image is formed. As a result, inkjet recording can be performed at higher speed, and an image having high density and resolution is obtained even when recording is performed at high speed.

The amount of the treatment liquid to be applied is not particularly limited as long as the ink composition can be coagulated, and is preferably 0.1 g/m² or more in terms of the amount of applied coagulant. The amount of the applied coagulant is more preferably from 0.2 to 0.7 g/m². When the amount of the applied coagulant is 0.1 g/m² or more, superior high-speed coagulation properties that accord with various modes of the use of the inkjet composition are maintained. A coagulant application amount of 0.7 g/m² or less is preferable in that disadvantageous influences, such as change in gloss, are not given to the surface properties of the recording medium to which the treatment liquid is applied. From the viewpoint of improving rubbing resistance, the application amount of the treatment liquid is preferably such that the amount of the (second) polymerizable compound that undergoes polymerization when irradiated with an active energy radiation is 0.1 g/m² or more.

In the present invention, it is preferable that the ink applying step is performed after the treatment-liquid applying step and a heat-drying step of drying the treatment liquid on the recording medium by heating is performed during a period after the application of the treatment liquid onto a recording medium until the application of the ink composition. By drying the treatment liquid by heating prior to the ink applying step, the ink receiving properties, including suppression of bleed, are improved, and a visible image having superior color density and hue can be recorded.

The drying by heating may be performed with a known heating means, such as a heater, or a heating means utilizing blowing of air, such as a drier, or a means having a combination thereof. Examples of the heating method include: a method of supplying heat from the side of the recording medium opposite to the surface on which the treatment liquid has been applied, using a heater or the like; a method of blowing a warm or hot air to the surface of the recording medium on which the treatment liquid has been applied; a heating method using an infrared heater; and a combination of two or more of the above methods.

### -Recording Medium-

According to the inkjet recording method of the present invention, an image is recorded on a recording medium.
The recording medium is not particularly limited, and may be a cellulose-based general printing paper, such as high-quality paper, coat paper, or art paper, which is used for general offset printing and the like. When image recording is performed on the cellulose-based general printing paper by a general inkjet method using an aqueous ink, absorption and drying of the ink is relatively slow, colorant migration easily occurs after ink spotting, and image quality tends to lower. In contrast, according to the inkjet recording method of the present invention, a high-quality image recording having excellent color density and hue is achieved while suppressing the migration of the colorant.

The recording medium may be a commercially-available product, and examples thereof include high-quality papers (A) such as PRINCE WOOD FREE (tradename) manufactured by Oji Paper Co., Ltd., SHIRAOI (tradename) manufactured by Nippon Paper Industries Co., Ltd., and *New NPI jo-shitsu* (New NPI high-quality; tradename) manufactured by Nippon Paper Industries Co., Ltd.; very light-weight coated papers such as EVER LIGHT COATED (tradename) manufactured by Oji Paper Co., Ltd. and AURORA S (tradename) manufactured by Nippon Paper Industries Co., Ltd.; lightweight coat papers (A3) such as TOPKOTE (L) (tradename) manufactured by Oji Paper Co., Ltd. and AURORA L (tradename) manufactured by Nippon Paper Industries Co., Ltd.; coat papers (A2, B2) such as TOPKOTE PLUS (tradename) manufactured by Oji Paper Co., Ltd. and AURORA COAT (tradename) manufactured by Nippon Paper Industries Co., Ltd.; and art papers (A1) such as 2/SIDE GOLDEN CASK GLOSS (tradename) manufactured by Oji Paper Co., Ltd. and TOKUBISHI ART (tradename) manufactured by Mitsubishi Paper Mills Ltd. As the recording medium, various inkjet-recording papers exclusively for photos may be used.

Among the recording media, coated paper, which is used for general offset printing, is preferable. The coated paper is produced generally by coating a surface of cellulose-based paper (such as high-quality paper or neutral paper), which has not been subjected to surface treatment, with a coating material so as to form a coating layer. When image forming is performed by usual water-based inkjet, the coated paper tends to produce problems in quality, for example in image gloss or rubbing resistance. However, unevenness in gloss is suppressed and an image having excellent gloss and rubbing resistance can be obtained according to the inkjet recording method of the present invention even when the coated paper is used. In particular, it is preferable to use a coated paper having base paper and a coated layer including an inorganic pigment, and it is more preferable to use a coated paper having base paper and a coated layer including kaolin and/or calcium bicarbonate. Specifically, art paper, coat paper, lightweight coat paper, or very light-weight coat paper is preferable.

### ∼Inket recording apparatus∼

Next, an example of an inkjet recording apparatus favorably used for the image recording method of the present invention will be explained in detail with reference to Fig. 1. Fig. 1 is a schematic view showing an example of a structure of the entire inkjet recording apparatus.

As shown in Fig. 1, the inkjet recording apparatus includes: treatment liquid application unit 12, having treatment liquid jetting head 12S that jets the treatment liquid; treatment liquid drying zone 13, having heating unit (not shown) that dries the applied treatment liquid; and ink jetting unit 14 that jets various ink compositions; and ink drying zone 15 at which the jetted ink composition is dried, in this order in the conveyance direction of the recording medium (the direction of the arrow shown in the figure). Further, UV ray irradiation unit 16, having UV ray irradiation lamp 16S, is provided downstream of ink drying zone 15 in the conveyance direction of the recording medium.

The recording medium that has been supplied to the inkjet recording apparatus is conveyed by conveyance rollers from a feed section to treatment liquid application unit 12, then to treatment liquid drying zone 13, then to ink jetting unit 14, then to ink drying zone 15, and then to UV ray irradiation unit 16, and then accumulated in an accumulation section.
The feed section feeds sheets of the recording medium from a case in which the sheets are loaded. The conveyance of the recording medium may be conducted by a method other than the method using conveyance rollers, and examples thereof include a drum conveyance method using a drum-shaped member, a belt conveyance method, or a stage conveyance method using a stage.

Among the plural conveyance rollers provided in the inkjet recording apparatus, at least one roller may be a drive roller to which the force generated by a motor (not shown) is transmitted. By rotating the drive roller at a constant rate using the motor, the recording medium is conveyed in a predetermined direction at a predetermined conveyance amount.

Treatment liquid application unit 12 has treatment liquid jetting head 12S, which is connected to a storage tank in which the treatment liquid is stored. Treatment liquid jetting head 12S jets the treatment liquid from jetting nozzles disposed to face the recording surface of the recording medium so that droplets of the treatment liquid can be applied onto the recording medium. The method used in treatment liquid application unit 12 is not limited to a method of jetting from a head in the form of a nozzle, and may be a coating method using a coating roller. According to the coating method, the treatment liquid may be readily applied to almost the entire one surface of the recording medium, including an image portion on which ink droplets are to be spotted by ink jetting unit 14 provided at the downstream side.
In order to make uniform the thickness of the treatment liquid applied onto the recording medium, an air-knife may be used, or a method of providing a member having an acute angle to give a gap between the member and the recording medium that corresponds to the predetermined amount of treatment liquid.

Treatment liquid drying zone 13 is positioned downstream of treatment liquid application unit 12 in the conveyance direction of the recording medium. Treatment liquid drying zone 13 may include: a known heating means such as a heater; an air blower such as a drier; or a combination thereof. The heating may be conducted by a method of disposing a heat-generating member, such as a heater, at a side of the recording medium opposite to the surface applied with treatment liquid wherein, if the recording medium is conveyed automatically, the heat-generating member may be positioned, for example, below the conveyance system that conveys the recording medium placed thereon; or by a method of blowing warm or hot air onto the surface of the recording medium applied with treatment liquid; or by a method of using an infrared heater. Any of these methods may be used singly, or in combination of two or more thereof.

Since the surface temperature of the recording medium may vary depending on the type (material, thickness and the like) of the recording medium and the environmental temperature, it is preferable to dry the treatment liquid while regulating the surface temperature by using a system including a measurement section that measures the surface temperature of the recording medium and a control section that provides the heating control unit with feedback on the temperature measured by the measurement section. The measurement section for measuring the surface temperature of the recording medium is preferably a contact-type or non-contact type thermometer.

The solvent may be removed using, for example, a solvent-removing roller. Alternatively, a method in which excess solvent is removed from the recording medium by an air knife is also applicable.

Ink jetting unit 14 is positioned downstream of treatment liquid drying zone 13 with respect to the conveyance direction of the recording medium. Ink jetting unit 14 includes recording heads (ink jetting heads) 30K, 30C, 30M and 30Y, which are connected to ink reservoirs that store inks of black (K), cyan (C), magenta (M) and yellow (Y), respectively. Each ink reservoir (not shown) stores an ink composition containing a pigment of a corresponding color, resin particles, water-soluble organic solvent and water, and supplies the ink to the corresponding head among ink jetting heads 30K, 30C, 30M and 30Y, as necessary, when image recording is performed. Further, as shown in Fig. 1, recording heads 30A and 30B for jetting inks of specific colors may be further provided, which are positioned downstream of ink jetting heads 30K, 30C, 30M and 30Y with respect to the conveyance direction of the recording medium, such that recording heads 30A and 30B jet the inks having specific colors as necessary.

Ink jetting heads 30K, 30C, 30M and 30Y jet inks in a manner corresponding to the image to be formed, through jetting nozzles that are positioned so as to face the recording surface of the recording medium. In this way, inks of the respective colors are applied to the recording surface of the recording medium to form a color image.

Treatment liquid jetting head 12S and ink jetting heads 30K, 30C, 30M, 30Y, 30A and 30B are each in the form of full-line head in which a number of jetting ports (nozzles) are aligned along the maximum recording width of the image to be formed on the recording medium. In this form, image recording on a recording medium can be carried out at higher speed compared to serial-type recording in which recording is carried out using a short-length shuttle head that reciprocates in the width direction of the recording medium (in a direction on the plane of the recording medium that is perpendicular to the conveyance direction of the recording medium) in a scanning manner. In the present invention, either of the above serial-type recording method or a recording method capable of recording at relatively high speed, such as a single-path system in which an image is formed in one scanning-movement by jetting using a line head while moving the recording medium relative to the line head in the fast scanning direction, may be employed. In the image recording method of the present invention, a high-quality image having high reproducibility may be obtained even in the single-path system.
In the figure, treatment liquid jetting head 12S and ink jetting heads 30K, 30C, 30M, 30Y, 30A and 30B have the same structure.

The application amount of the treatment liquid and the application amount of the ink composition are preferably regulated in accordance with the necessity. For example, the amount of the treatment liquid may be changed according to the type of the recording medium, in order to, for example, adjust the properties such as viscoelasticity of the aggregates formed upon mixing of the treatment liquid and the ink composition.

Ink drying zone 15 is positioned downstream of ink jetting unit 14 in the conveyance direction of the recording medium. Ink drying zone 15 may have a structure similar to that of treatment liquid drying zone 13.

UV ray irradiation unit 16 is disposed further downstream of ink drying zone 15 in the conveyance direction of the recording medium, and emits UV rays from UV ray irradiation lamp 16S provided in UV ray irradiation unit 16, thereby polymerizing and curing the monomer components contained in an image after drying of the image. UV ray irradiation lamp 16S is a lamp which is disposed to oppose the recording surface of the recording medium, and with which the entire recording surface is irradiated to cure the entire image. The lamp used in UV ray irradiation unit 16 is not limited to UV ray irradiation lamp 16S, and it is also possible to use a halogen lamp, a high-pressure mercury lamp, a laser, a LED, an electron-beam irradiation device, or the like.

The inkjet recording apparatus may further include a heating unit at the conveyance path from the feed section to the accumulation section, in order to conduct a heat treatment on the recording medium. For example, by providing a heating unit at a desired position, such as upstream of treatment liquid drying zone 13 or between ink jetting unit 14 and ink drying zone 15, the temperature of the recording medium can be increased to a desired temperature, at which drying and fixing is performed effectively.

### EXAMPLES

In the following, the present invention will be described in further details with reference to the examples. However, the present invention is not limited to these examples as long as the gist of the invention is retained. Moreover, the term "part" refers to "part by mass" unless otherwise noted.

(Examples 1 to 3, Comparative Examples 1 to 4)
[*Preparation of aqueous ink*]
*<<Preparation of Cyan ink C1-1>>*
*-Preparation of cyan dispersion liquid C1-*
6 parts of styrene, 11 parts of stearyl methacrylate, 4 parts of styrene macromer
(AS-6, trade name, manufactured by Toagosei Co., Ltd.), 5 parts of BLEMMER PP-500 (trade name, polypropylene glycol monomethacrylate, manufactured by NOF Corporation), 5 parts of methacrylic acid, 0.05 parts of 2-mercaptoethanol, and 24 parts of methyl ethyl ketone were added into a reaction vessel to prepare a mixed solution.

Separately, 14 parts of styrene, 24 parts of stearyl methacrylate, 9 parts of styrene macromer (AS-6, trade name, manufactured by Toagosei Co., Ltd.), 9 parts of BLEMMER PP-500 (trade name, polypropylene glycol monomethacrylate, manufactured by NOF Corporation), 10 parts of methacrylic acid, 0.13 parts of 2-mercaptoethanol, 56 parts of methyl ethyl ketone, and 1.2 parts of 2,2'-azobis(2,4-dimethylvaleronitrile) were added into a dripping funnel to prepare a mixed solution.

In a nitrogen atmosphere, the mixed solution in the reaction vessel was heated to 75°C while stirring, and the mixed solution in the dripping funnel was gradually dripped into the reaction vessel over one hour. Two hours after the completion of the dripping, 12 parts of methyl ethyl ketone in which 1.2 parts of 2,2'-azobis(2,4-dimethylvaleronitrile) was dissolved was dripped into the reaction vessel over three hours. The mixed solution was further aged at 75°C for two hours and then at 80°C for two hours, thereby obtaining a polymer dispersant solution.

The weight average molecular weight of the polymer in the obtained polymer dispersant solution was measured in the following manner. A part of the polymer dispersant solution was isolated by removing the solvent, and the obtained solid content was diluted with tetrahydrofuran to 0.1 mass% to obtain a sample. The sample was subjected to high-speed GPC (gel permeation chromatography) using HLC-8220 GPC (columns: TSKgeL Super HZM-H, TSKgeL Super HZ4000, and TSKgeL Super HZ2000 (manufactured by Tosoh Corporation) connected in series). The weight average molecular weight of the polymer as measured was 25,000 (as a polystyrene-equivalent value), and the acid value of the polymer was found to be 80 mgKOH/g.

Next, 5.0 g (in terms of solid content) of the obtained polymer dispersant solution, 10.0 g of a cyan pigment (Pigment Blue 15:3, manufactured by Dainichiseika Color & Chemicals Mfg. Co., Ltd.), 40.0 g of methyl ethyl ketone, 8.0 g of 1 mol/L (liter) sodium hydroxide, and 82.0 g of ion exchange water were put in a vessel together with 300 g of 0.1 mm zirconia beads, and were dispersed for 6 hours at 1,000 rpm with a disperser Ready Mill (trade name, manufactured by Aimex Co., Ltd.). The resulting dispersion liquid was condensed under reduced pressure using an evaporator until methyl ethyl ketone was sufficiently removed, and the dispersion liquid was further condensed until the concentration of pigment reached 10%. Cyan pigment dispersion liquid C1 was thus obtained, in which the water-dispersible pigment was dispersed.

The volume average particle diameter (of the secondary particles) of the cyan dispersion liquid C1 as measured by a dynamic light scattering method using a particle size distribution meter MICROTRAC Version 10.1.2-211 BH (trade name, manufactured by Nikkiso Co., Ltd.) was 77 nm.

### -Synthesis of Fine Particles of Self-dispersing Polymer-

360.0g of methyl ethyl ketone was placed in a 2L three-necked flask equipped with a stirrer, a thermometer, a reflux condenser, and a nitrogen gas introduction tube, and was heated to 75°C. Thereafter, while the temperature inside the flask was maintained at 75°C, a mixture solution of 180.0g of phenoxyethyl acrylate, 162.0g of methyl methacrylate, 18.0g of acrylic acid, 72g of methyl ethyl ketone, and 1.44g of V-601 (tradename, manufactured by Wako Pure Chemical Industries Ltd.) was added dropwise into the flask at a constant rate such that the dropwise addition was completed in 2 hours. After the dropwise addition was completed, a solution of 0.72g of V-601 in 36.0g of methyl ethyl ketone was added into the flask, stirred at 75°C for 2 hours, and a solution of 0.72g of V-601 in 36.0g of isopropanol was further added, and the contents of the flask were stirred at 75°C for 2 hours. Then, the temperature inside the flask was increased to 85°C, and stirring was continued for another 2 hours. As a result, a resin solution of a copolymer of phenoxyethyl acrylate / methyl methacrylate / acrylic acid (in a ratio of 50/45/5 by mass) was obtained.

The weight average molecular weight (Mw) of the obtained copolymer as measured in a similar manner to the above was 64,000 (calculated as polystyrene-equivalent value according to gel permeation chromatography (GPC)). The acid value of the copolymer was found to be 38.9 mgKOH/g.

Then, 668.3g of the obtained resin solution was weighed, and 388.3g of isopropanol and 145.7ml of a 1mol/L NaOH aqueous solution were added to the resin solution, and then the temperature inside the reaction vessel was elevated to 80°C. Thereafter, 720.1g of distilled water was added dropwise into the reaction vessel at a rate of 20ml/min so as to form a water dispersion. The contents of the reaction vessel was allowed to stand, under atmospheric pressure, at a reaction vessel inside temperature of 80°C for 2 hours, and then 85°C for 2 hours, and then 90°C for 2 hours. Subsequently, the inside of the reaction vessel was depressurized, and the isopropanol, the methyl ethyl ketone, and the distilled water were removed in a total amount of 913.7g. As a result, a water dispersion of self-dispersing polymer fine particles B-1 having a solid concentration of 28.0 % by mass was obtained.

After the cyan dispersion liquid C1 was prepared as described above, the cyan dispersion liquid C1 was mixed with the water dispersion of self-dispersing polymer fine particles B-1, a polymerizable compound, an initiator, an organic solvent, a surfactant, and ion-exchange water, so that an ink having the following composition was prepared. After the preparation of the ink, the ink was filtered through a 5µm filter so as to remove coarse particles, whereby a cyan ink was obtained.

**<Composition of Cyan Ink C1-1>**

| | |
|---|---|
| Cyan pigment (Pigment blue 15:3, manufactured by | Dainich Color and Chemicals |
| Mfg. Co., Ltd.): | 4% by mass |
| Polymer dispersant solution: | 2% by mass |
| Water dispersion of self-dispersing polymer fine particles B-1: | |
| | 2% by mass |
| Nonionic compound 2 shown below (nonionic polymerizable compound): | |
| | 6% by mass |
| SANNIX (NEWPOL) GP250 (hydrophilic organic | solvent) (tradename, |
| manufactured by Sanyo Chemical Industries Ltd.): | 9% by mass |
| OLFINE E1010 (tradename, manufactured by Nissin | Chemical Industry Co., Ltd.): |
| | 1% by mass |
| IRGACURE 2959 (photopolymerization initiator) | (tradename, manufactured by Ciba |
| Specialty Chemicals): | 1% by mass |
| Ion-exchange water: | 75% by mass |

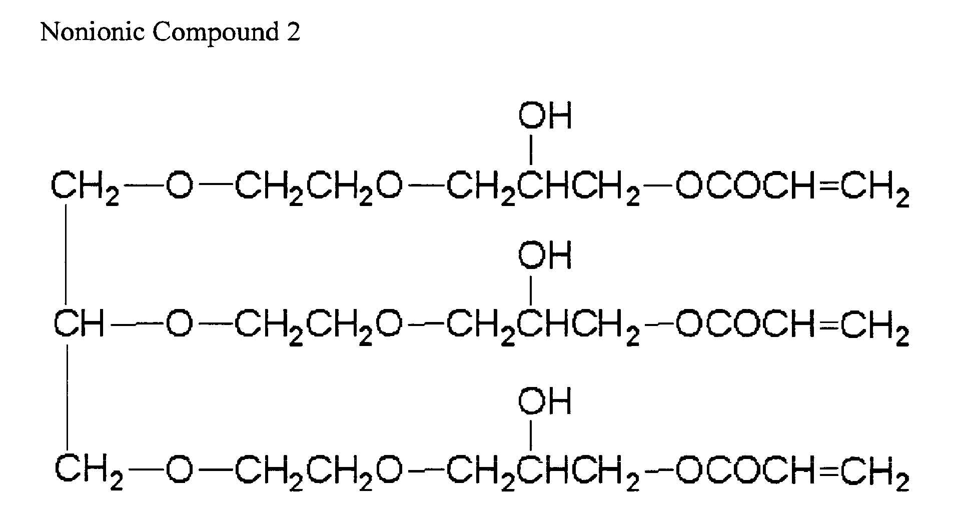

**<Composition of Cyan Ink C1-2>**

| | |
|---|---|
| Cyan pigment (Pigment Blue 15:3, manufactured by | Dainichi Color and Chemicals |
| Mfg. Co., Ltd.): | 4% by mass |
| Polymer dispersant solution: | 2% by mass |
| Water dispersion of self-dispersing polymer fine particles B-1: | |
| | 2% by mass |
| Nonionic compound 2 shown above (nonionic polymerizable compound): | |
| | 9% by mass |
| SANNIX (NEWPOL) GP250 (hydrophilic organic | solvent) (tradename, |
| manufactured by Sanyo Chemical Industries Ltd.): | 6% by mass |
| OLFINE E1010 (tradename, manufactured by Nissin | Chemical Industry Co., Ltd.): |
| | 1% by mass |
| IRGACURE 2959 (photopolymerization initiator) | (tradename, manufactured by Ciba |
| Specialty Chemicals): | 1% by mass |
| Ion-exchange water: | 75% by mass |

**<Composition of Cyan Ink C1-3>**

| | |
|---|---|
| Cyan pigment (Pigment Blue 15:3, manufactured by Dainichi Color and Chemicals | |
| Mfg. Co., Ltd.): | 4% by mass |
| Polymer dispersant solution: | 2% by mass |
| Water dispersion of self-dispersing polymer fine particles B-1: | |
| | 2% by mass |
| Nonionic compound 2 shown above (nonionic polymerizable compound): | |
| | 6% by mass |
| OLFINE E1010 (tradename, manufactured by Nissin Chemical Industry Co., Ltd.): | |
| | 1% by mass |
| Ion-exchange water: | 85% by mass |

**<Composition of Cyan Ink C1-4> (Comparative Ink)**

| | |
|---|---|
| Cyan pigment (Pigment Blue 15:3, manufactured by Dainichi Color and Chemicals | |
| Mfg. Co., Ltd.): | 4% by mass |
| Copolymer of styrene, acrylic acid, and ethyl acrylate | (having a number average |
| molecular weight of 9800 and an acid value of 190): | 2% by mass |
| ALMATEX Z116 (an emulsion-polymerization system resin emulsion having a resin | |
| component content of 50% by mass) (tradename, manufactured by Mitsui Chemicals Inc.): | |
| | 3% by mass |
| Nonionic compound 2 shown above (nonionic polymerizable compound): | |
| | 6% by mass |
| OLFINE E1010 (tradename, manufactured by Nissin | Chemical Industry Co., Ltd.): |
| | 1% by mass |
| IRGACURE 2959 (photopolymerization initiator) | (tradename, manufactured by Ciba |
| Specialty Chemicals): | 1% by mass |
| Ion-exchange water: | 83% by mass |

**<Composition of Cyan Ink C1-5> (Comparative Ink)**

| | |
|---|---|
| Cyan pigment (Pigment Blue 15:3, manufactured by Dainichi Color and Chemicals | |
| Mfg. Co., Ltd.): | 4% by mass |
| Copolymer of styrene, acrylic acid, and ethyl acrylate (having a number average | |
| molecular weight of 9800 and an acid value of 190): | 2% by mass |
| Glycerin: | 20% by mass |
| OLFINE E1010 (tradename, manufactured by Nissin | Chemical Industry Co., Ltd.): |
| | 1% by mass |
| IRGACURE 2959 (photopolymerization initiator) | (tradename, manufactured by Ciba |
| Specialty Chemicals): | 1% by mass |
| Ion-exchange water: | 72% by mass |

*<Composition of Cyan Ink C1-6> (Comparative Ink)* Cyan ink C1-6 was prepared in the same manner as the preparation of cyan ink C1-1, except that nonionic compound 2 was replaced with the same weight of SANNIX (NEWPOL) GP250.
*[Preparation of Aqueous Treatment Liquid]*
A treatment liquid was prepared as described below.

### (Preparation of Treatment Liquid B-1)

The components of the following composition were mixed to form a treatment liquid B-1. The viscosity, surface tension, and pH (25 ± 1°C) of treatment liquid B-1 as measured in the same manner as above was 2.9 mPa·s (viscosity), 40 mN/m (surface tension), and 1.0 (pH), respectively.

**Composition of Treatment Liquid B-1**

| | |
|---|---|
| Malonic acid (manufactured by Wako Pure Chemical | Industries Ltd.): |
| | 25% by mass |
| Diethyleneglycol monomethyl ether (manufactured | by Wako Pure Chemical |
| Industries Ltd.): | 5% by mass |
| Nonionic compound 2 shown above (nonionic polymerizable compound): | |
| | 20% by mass |
| EMULGEN P109 (nonionic surfactant) (tradename, | manufactured by Kao |
| Corporation): | 1% by mass |
| Ion-exchange water: | 49% by mass |

### (Preparation of Treatment Liquid B-2)

The components of the following composition were mixed to form treatment liquid B-2. The viscosity, surface tension, and pH (25 ± 1 °C) of treatment liquid B-2 as measured in the same manner as above were 2.9 mPa·s (viscosity), 40 mN/m (surface tension), and 1.0 (pH), respectively.

**Composition of Treatment Liquid B-2**

| | |
|---|---|
| Malonic acid (manufactured by Wako Pure Chemical | Industries Ltd.): |
| | 25% by mass |
| Diethyleneglycol monomethyl ether (manufactured | by Wako Pure Chemical |
| Industries Ltd.): | 5% by mass |
| Cationic compound 3 shown below (cationic polymerizable compound): | |
| | 20% by mass |
| EMULGEN P109 (nonionic surfactant) (tradename, | manufactured by Kao |
| Corporation): | 1% by mass |
| IRGACURE 2959 (photopolymerization initiator) | (tradename, manufactured by Ciba |
| Specialty Chemicals): | 1% by mass |
| Ion-exchange water: | 48% by mass |

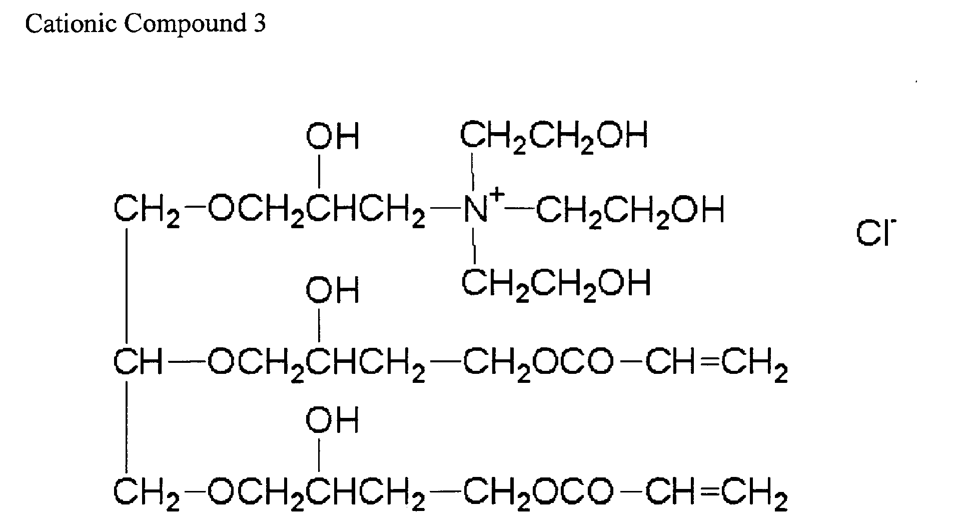

### (Preparation of Treatment Liquid B-3)

The components of the following composition were mixed to form treatment liquid B-3. The viscosity, surface tension, and pH (25 ± 1 °C) of treatment liquid B-3 as measured in the same manner as above was 2.5 mPa·s (viscosity), 40 mN/m (surface tension), and 1.0 (pH), respectively.

**Composition of Treatment Liquid B-3**

| | |
|---|---|
| Malonic acid (manufactured by Wako Pure Chemical | Industries Ltd.): |
| | 25% by mass |
| Diethyleneglycol monomethyl ether (manufactured | by Wako Pure Chemical |
| Industries Ltd.): | 20% by mass |
| EMULGEN P109 (nonionic surfactant) (tradename, | manufactured by Kao |
| Corporation): | 1% by mass |
| Ion-exchange water: | 54% by mass |

### [Image Recording and Evaluation]

The inks and the aqueous treatment liquids were used in the combinations described in Table 1 below, and images were recorded as described below. The recorded images were evaluated with respect to image quality and rubbing resistance according to the below-described method. The evaluation results are as shown in Table 1 below.

<<*Image Recording*>> First, an inkjet apparatus was prepared which has, as shown in Fig. 1, treatment liquid application unit 12 equipped with treatment liquid jetting head 12S that jets an aqueous treatment liquid, treatment liquid drying zone 13 that dries the applied aqueous treatment liquid, ink jetting unit 14 that jets various aqueous inks, ink drying zone 15 that dries the applied aqueous ink, and UV ray irradiation unit 16 equipped with UV ray irradiation lamp 16S capable of irradiating UV rays are provided sequentially in the conveyance direction of the recording medium (the direction of the arrow shown in the figure).

Although not shown in the figure, treatment liquid drying zone 13 has an air blower at the recording surface side of the recording medium that supplies dry air so as to dry the treatment liquid, and an infrared heater at the non-recording surface of the recording medium. Treatment liquid drying zone 13 is configured such that at least 70% by mass of the water contained in the aqueous treatment liquid is evaporated (dried) off during a period until 900msec has passed after the application of the treatment liquid is started at the treatment liquid application unit, by regulating the temperature and air volume. In ink jetting unit 14, black-ink jetting head 30K, cyan-ink jetting head 30C, magenta-ink jetting head 30M, and yellow-ink jetting head 30Y are disposed in this order in the conveyance direction (the direction of the arrow). Each of the heads is a 1200dpi / 10inch-wide full-line head having a driving frequency of 25kHz and a recording medium conveyance velocity of 530mm/sec.
The respective heads are configured to jet inks of respective colors in a single-pass manner while moving in the fast scanning direction relative to the recording medium.

The treatment liquid and ink prepared above were charged into storage tanks (not shown in the figure) respectively connected to treatment jetting head 12S and cyan ink jetting head 30C of the inkjet apparatus that was configured as shown in Fig. 1, and a solid image and a 1200dpi line image were recorded on sheets of a recording medium. The amount of the aqueous treatment liquid applied to each sheet of the recording medium was set to be 5ml/m². As the recording medium, U-LITE (having a basis weight of 84.9 g/m², (tradename, manufactured by Nippon Paper Industries Co., Ltd.) was used.

During the image recording, the aqueous treatment liquid and the cyan ink were jetted at a resolution of 1200 dpi× 600 dpi and an ink amount per droplet of 3.5pl. The line image was recorded by jetting in a single-pass manner so as to form a line having a thickness of 1 dot, a line having a thickness of 2 dots, and a line having a thickness of 4 dots along the fast scanning direction. Regarding the formation of the solid image, a sheet of the recording medium was cut into a A5-size, and a solid image was formed by jetting the ink onto the entire one surface of the sample.

When the images were recorded, the treatment liquid was jetted from treatment liquid jetting head 12S onto the recording medium in a single-pass manner, and then the treatment liquid was dried in treatment liquid drying zone 13. The recording medium passed the treatment liquid drying zone until 900 msec after the initiation of the jetting of the aqueous treatment liquid. In treatment liquid drying zone 13, while the spotted aqueous treatment liquid was heated with an infrared heater from the side (back side) of the recording medium that was opposite to the surface at which the treatment liquid was spotted such that the surface temperature of the spotted treatment liquid was maintained at 40 to 45°C, hot air having a temperature of 120°C was blown from a blower to the recording surface, and the air volume was changed to achieve a desired drying amount. Subsequently, the cyan ink was jetted from cyan ink jetting head 30C in a single pass manner to record an image. Then, in a manner similar to the above, drying of the ink was performed in ink drying zone 15 by blowing a hot air having a temperature of 120°C and a velocity of 5m/sec from a blower to the recording surface for 15 seconds while heating the spotted ink with an infrared heater from the side (back side) of the recording medium that was opposite to the surface at which the ink was spotted. After the drying of the image, the image was irradiated with UV rays in UV ray irradiation unit 16, whereby the image was cured.

<<*Image Evaluation>> 1. Image Quality (Image Printing Properties)* Based on the lines having thicknesses of 1 dot, 2 dots, and 4 dots, respectively, which were recorded on a sheet of U-LITE (tradename, manufactured by Nippon Paper Industries Co., Ltd.) as described above, image printing properties were evaluated according to the following criteria. The evaluation results are shown in Table 1 below.

### <Evaluation Criteria>

1. Each of the three lines was uniform.
2. Although the line having a thickness of 1 dot was uniform, at least one of non-uniformity of line thickness, line breaking, or excessive ink deposition was observed at a part of the lines having thicknesses of 2 dots and 4 dots.
3. Although the line having a thickness of 1 dot was uniform, at least one of non-uniformity of line thickness, line breaking, or excessive ink deposition was observed over the entire lengths of the lines having thicknesses of 2 dots and 4 dots.
4. At least one of non-uniformity of line thickness, line breaking, or excessive ink deposition was clearly observed over the entire length of each of the three lines.

*2. Rubbing Resistance* The A5-sized sample carrying the solid image on the entire one surface thereof was left to stand in an environment of 25°C and 50%RH for 72 hours. Then a sheet of U-LITE (tradename, manufactured by Nippon Paper Industries Co., Ltd.) that has not undergone recording (hereinafter referred to as *unused sample*) was placed over the surface of the A5-sized sample after the standing, and rubbed thereagainst ten strokes with a load of 200 kg/m². Thereafter, the unused sample and the solid image were observed with the naked eye, and evaluated according to the following criteria. The evaluation results are shown in Table 1 below.

### <Evaluation Criteria>

1. The color did not transfer onto the unused sample, and deterioration in the rubbed solid image was not observed, either.
2. Although the color transferred to the unused sample, deterioration in the rubbed solid image was not observed.
3. The color transferred to the unused sample, and deterioration in the rubbed solid image was observed.
4. A part of the rubbed solid image was erased, and the base paper of U-LITE (tradename) was exposed.

**Table 1**

| | Ink | | | | Treatment Liquid | | | | Evaluation | |
|---|---|---|---|---|---|---|---|---|---|---|
| | Type | Polymer Particle | Polymerizable Compound | Initiator | Type | Coagulant | Polymerizable Compound | Initiator | Image Printing Properties | Rubbing Resistance |
| Example 1 | C1-1 | Polymer Fine Particle B-1 | Nonionic Compound 2 | Present | B-1 | Malonic Acid | Nonionic Compound 2 | - | 1 | 1 |
| Example 2 | C1-2 | Polymer Fine Particle B-1 | Nonionic Compound 2 | Present | B-1 | Malonic Acid | Nonionic Compound 2 | - | 1 | 1 |
| Example 3 | C1-3 | Polymer Fine Particle B-1 | Nonionic Compound 2 | - | B-2 | Malonic Acid | Cationic Compound 3 | Present | 1 | 1 |
| Comparative Example 1 | C1-4 | Resin Emulsion | Nonionic Compound 2 | Present | B-3 | Malonic Acid | - | - | 3 | 3 |
| Comparative Example 2 | C1-5 | - | - | Present | B-3 | Malonic Acid | - | - | 4 | 4 |
| Comparative Example 3 | C1-6 | Polymer Fine Particle B-1 | - | Present | B-1 | Malonic Acid | Nonionic Compound 2 | - | 1 | 4 |
| Comparative Example 4 | C1-2 | Polymer Fine Particle B-1 | Nonionic Compound 2 | Present | - | | | | 4 | 4 |

### Examples 4 to 10

Cyan inks C2-1 to C2-7 were prepared, and image recording and evaluations were performed in the same manner as in Example 1, except that nonionic compound 2 used in the preparation of cyan ink C1-1 was replaced by the polymerizable compounds shown in Table 2 below. The evaluation results are shown in Table 2 below.

**Table 2**

| | Ink | Polymerizable Compound | Evaluation | |
|---|---|---|---|---|
| | | | Image Printing Properties | Rubbing Resistance |
| Example 4 | C2-1 | Trimethylolpropane triacrylate | 1 | 1 |
| Example 5 | C2-2 | Nonionic Compound 3 shown below | 1 | 1 |
| Example 6 | C2-3 | Nonionic Compound 7 shown below | 1 | 1 |
| Example 7 | C2-4 | Nonionic Compound (c) shown below | 1 | 1 |
| Example 8 | C2-5 | Nonionic Compound (h) shown below | 1 | 1 |
| Example 9 | C2-6 | Nonionic Compound (j) shown below | 1 | 1 |
| Example 10 | C2-7 | ARONIX TO-1343 (*1) (tradename, manufactured by TOAGOSEI Co., Ltd.) | 1 | 1 |

| | | | | |
|---|---|---|---|---|
| * 1: acrylic oligomer | | | | |

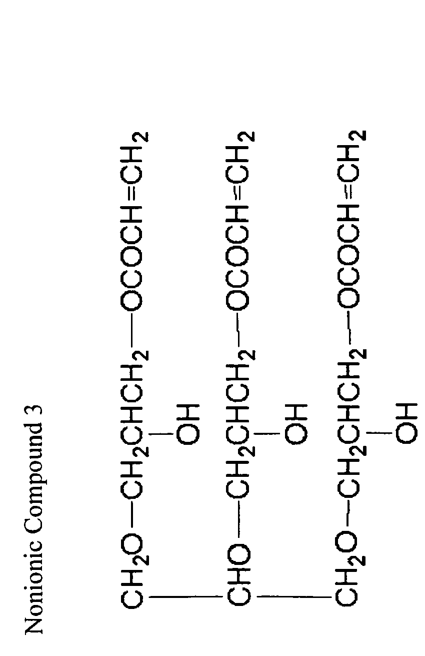

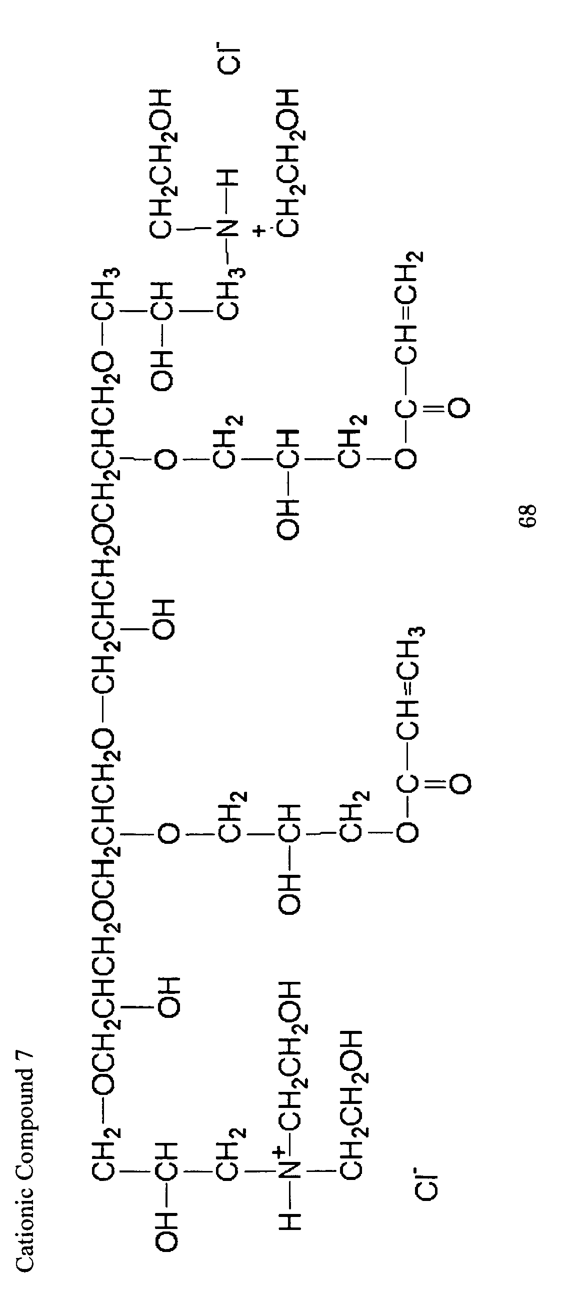

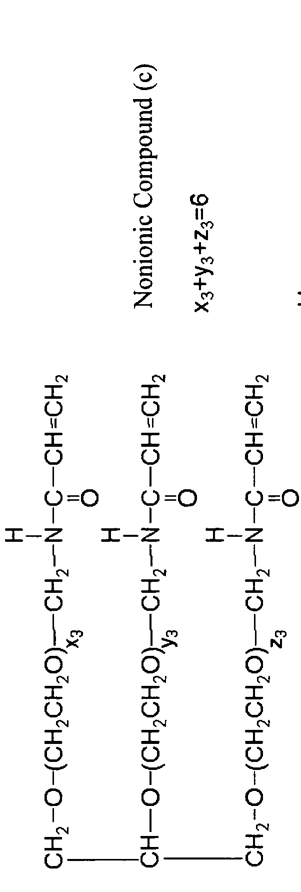

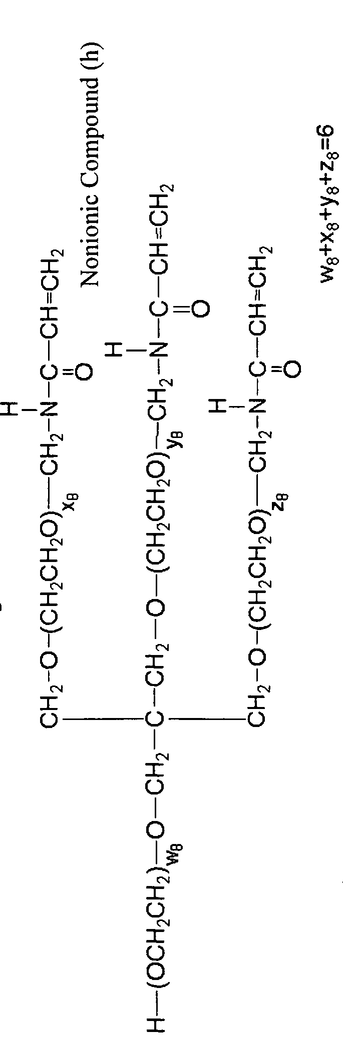

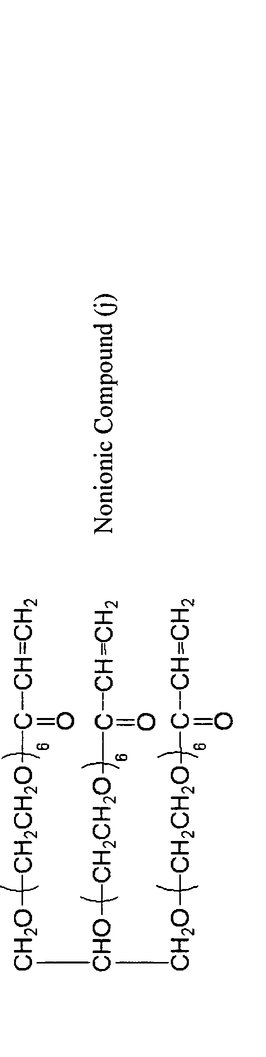

As shown in Tables 1 and 2 above, in the Examples, images were obtained which had excellent rubbing resistance and showed excellent image printing properties including high reproducibility of thin lines and minute portions in the images even when recording was performed at high speed. In contrast, the Comparative Examples were inferior in rubbing resistance of images as well as in image printing properties.

According to the invention, an ink set and an inkjet recording method are provided with which excellent ink coagulation properties are obtained and recording of an image having excellent rubbing resistance and image printing properties is performed at higher speed than before.
Exemplary embodiments of the present invention include, but are not limited to, those described below.

<1> An ink set comprising: an ink composition including a pigment, polymer particles, and a first water-soluble polymerizable compound that undergoes polymerization when irradiated with an active energy radiation; and a treatment liquid including a coagulant that coagulates components in the ink composition and a second water-soluble polymerizable compound that undergoes polymerization when irradiated with an active energy radiation and that may be the same as the first water-soluble polymerizable compound or different from the first water-soluble polymerizable compound.
<2> The ink set according to <1>, wherein the pigment is a water-dispersible pigment, and at least a part of a surface of the water-dispersible pigment is covered with a polymer dispersant.
<3> The ink set according to <2>, wherein the polymer dispersant has a carboxyl group.

<4> The ink set according to any one of <1> to <3>, wherein the coagulant is an organic acid.
<5> The ink set according to any one of <1> to <4>, wherein the coagulant is a divalent or higher-valent organic acid.
<6> The ink set according to any one of <2> to <5>, wherein the polymer dispersant has an acid value of 100 mgKOH/g or less.

<7> The ink set according to any one of <1> to <6>, wherein the polymer particles are self-dispersing polymer particles having an acid value of 50 mgKOH/g or less.
<8> The ink set according to any one of <1> to <7>, wherein at least one of the first and second water-soluble polymerizable compounds is a nonionic or cationic compound.
<9> The ink set according to any one of <1> to <8>, wherein at least one of the ink composition or the treatment liquid comprises an initiator that initiates polymerization of at least one of the first and second water-soluble polymerizable compounds.

<10> An inkjet recording method comprising: applying an ink composition onto a recording medium by an inkjet method, the ink composition including a pigment, polymer particles, and a first water-soluble polymerizable compound that undergoes polymerization when irradiated with an active energy radiation; and applying a treatment liquid onto the recording medium, the treatment liquid including a coagulant that coagulates components in the ink composition and a second water-soluble polymerizable compound that undergoes polymerization when irradiated with an active energy radiation and that may be the same as the first water-soluble polymerizable compound or different from the first water-soluble polymerizable compound.
<11> The inkjet recording method according to <10>, wherein the recording medium is a coated paper having a base paper and a coating layer containing an inorganic pigment.

All publications, patent applications, and technical standards mentioned in this specification are herein incorporated by reference to the same extent as if each individual publication, patent application, or technical standard was specifically and individually indicated to be incorporated by reference.

## Claims

1. An ink set comprising
an ink composition including a pigment, polymer particles, and a first water-soluble polymerizable compound that undergoes polymerization when irradiated with an active energy radiation; and
a treatment liquid including a coagulant that coagulates components in the ink composition and a second water-soluble polymerizable compound that undergoes polymerization when irradiated with an active energy radiation and that may be the same as the first water-soluble polymerizable compound or different from the first water-soluble polymerizable compound.

2. The ink set according to claim 1, wherein the pigment is a water-dispersible pigment, and at least a part of a surface of the water-dispersible pigment is covered with a polymer dispersant.

3. The ink set according to claim 2, wherein the polymer dispersant has a carboxyl group.

4. The ink set according to any one of claims 1 to 3, wherein the coagulant is an organic acid.

5. The ink set according to any one of claims 1 to 4, wherein the coagulant is a divalent or higher-valent organic acid.

6. The ink set according to any one of claims 2 to 5, wherein the polymer dispersant has an acid value of 100 mgKOH/g or less.

7. The ink set according to any one of claims 1 to 6, wherein the polymer particles are self-dispersing polymer particles having an acid value of 50 mgKOH/g or less.

8. The ink set according to any one of claims 1 to 7, wherein at least one of the first and second water-soluble polymerizable compounds is a nonionic or cationic compound.

9. The ink set according to any one of claims 1 to 8, wherein at least one of the ink composition or the treatment liquid comprises an initiator that initiates polymerization of at least one of the first and second water-soluble polymerizable compounds.

10. An inkjet recording method comprising:
applying an ink composition onto a recording medium by an inkjet method, the ink composition including a pigment, polymer particles, and a first water-soluble polymerizable compound that undergoes polymerization when irradiated with an active energy radiation; and
applying a treatment liquid onto the recording medium, the treatment liquid including a coagulant that coagulates components in the ink composition and a second water-soluble polymerizable compound that undergoes polymerization when irradiated with an active energy radiation and that may be the same as the first water-soluble polymerizable compound or different from the first water-soluble polymerizable compound.

11. The inkjet recording method according to claim 10, wherein the recording medium is a coated paper having a base paper and a coating layer containing an inorganic pigment.
